# EUROPEAN PATENT APPLICATION

(11) **EP 4 321 743 A2**
(43) Date of publication of application: **14.02.2024**
(21) Application number: 23189337.1
(22) Date of filing: 02.08.2023
(51) Int. Cl.: F02C 3/107, F02C 7/36, F02K 3/06

(54) **DUCTED TURBOMACHINERY ENGINES**

(30) Priority: 10.08.2022 US 202217885393
(71) Applicant: General Electric Company, Schenectady, NY 12345 (US)
(72) Inventor: CLEMENTS, Jeffrey, Cincinnati, 45215 (US)
(74) Representative: Openshaw & Co.

(57) **Abstract**

A turbomachinery engine comprises a ducted fan, a high-pressure compressor, a low-pressure turbine, a gearbox, and a ducted engine correlation parameter (DECP). The DECP is within a range of 0.10-0.25 and is defined as 10^{∗}D/GR/N_{LPT}²/N_{HPC}, where D is a fan blade tip diameter at a leading edge of the ducted fan measured in feet, GR is a gear ratio of the gearbox, N_{LPT} is a stage count of the low-pressure turbine, and N_{HPC} is a stage count of the high-pressure compressor.

## Description

### FIELD

This disclosure relates generally to turbomachinery engines and, in particular, to ducted rotor turbomachinery engine configurations.

### BACKGROUND

A turbomachinery engine for an aircraft includes a core engine that drives a propulsor. The propulsor generates the majority of the thrust of the turbomachinery engine. The thrust generated by the propulsor can be used to move the aircraft.

In some instances, a turbomachinery engine is configured as a direct drive engine. Direct drive engines are configured such that a power turbine (e.g., a low-pressure turbine) of the core engine is directly coupled to the propulsor. As such, the power turbine and the propulsor rotate at the same rotational speed (i.e., the same rpm).

In other instances, a turbomachinery engine can be configured as a geared engine. Geared engines include a gearbox disposed between and interconnecting the propulsor and power turbine of the core engine. The gearbox, for example, allows the power turbine of the core engine to rotate at a different speed than the propulsor. Thus, the gearbox can, for example, allow the power turbine of the core engine and the propulsor to operate at their respective rotational speeds for maximum efficiency and/or power production.

In some instances, a propulsor of a turbomachinery engine can be a fan encased within a fan case and/or nacelle. This type of turbomachinery engine can be referred to as "a ducted engine."

In other instances, a propulsor of a turbomachinery engine can be exposed (e.g., not within a fan case or a nacelle). This type of turbomachinery engine can be referred to as "an open rotor engine."

In particular instances, a turbomachinery engine can comprise a gearbox and a ducted propulsor. As such, there is a need for improved geared, ducted turbomachinery engines. There is also a need for devices and methods that can be used to develop and manufacture geared, ducted turbomachinery engines more efficiently and/or precisely.

### BRIEF DESCRIPTION

Aspects and advantages of the disclosed technology will be set forth in part in the following description, or may be obvious from the description, or may be learned through practice of the technology disclosed in the description.

Various turbomachinery engines and gear assemblies are disclosed herein. The disclosed turbomachinery engines comprise a gearbox and a ducted propulsor. Additionally, the disclosed turbomachinery engines are characterized or defined by a ducted engine correlation parameter. The ducted engine correlation parameter (DECP) equals 10^{∗}D/GR/N_{LPT}²/N_{HPC}, where D is the fan blade tip diameter measured in feet, GR is the gear ratio of the gearbox, N_{LPT} is the stage count of the low-pressure turbine, and N_{HPC} is the stage count of the high-pressure compressor. The DECP can be used, for example, to configure an engine such that the engine has greater efficiency and performance than typical engines.

The engines disclosed herein comprise a DECP within a range of 0.10-0.25. Engines comprising a DECP within the disclosed range have been found, for example, to have reduced fuel burn by balancing component efficiencies and weight, while also meeting regulatory requirements for emissions and noise. The DECP thus provides improved turbomachinery engines and/or can help simplify one or more complexities of geared, ducted engine development.

In some instances, an engine can comprise a ducted fan, a gearbox, a compressor section, a combustor, and a turbine section.

In some instances, a compressor section can comprise a low-pressure compressor (which can also be referred to as "a booster"), a high-pressure compressor, and/or an intermediate compressor.

In some instances, a turbine section can comprise a low-pressure turbine, a high-pressure turbine, and/or an intermediate turbine.

In some examples, a turbomachinery engine comprises a ducted rotor assembly, a high-pressure compressor, a low-pressure turbine, a gearbox, and a ducted engine correlation parameter. The ducted rotor assembly comprises a plurality of rotor blades arranged in a single row and defining a fan blade tip diameter. The high-pressure compressor comprises a stage count defined by a number of rows of rotating blades of the high-pressure compressor. The low-pressure turbine comprises a stage count defined by a number of rows of rotating blades of the low-pressure turbine, and the low-pressure turbine is aft of and in fluidic communication with the high-pressure compressor. The gearbox comprises an input, an output, and a gear ratio. The input of the gearbox is coupled to the low-pressure turbine, and the output of the gearbox is coupled to the ducted rotor assembly. The ducted engine correlation parameter is within a range of 0.10-0.25. The ducted engine correlation parameter equals 10^{∗}D/GR/N_{LPT}/N_{HPC}, where D is the fan blade tip diameter at a leading edge measured in feet, GR is the gear ratio of the gearbox, N_{LPT} is the stage count of the low-pressure turbine, and N_{HPC} is the stage count of the high-pressure compressor.

These and other features, aspects, and/or advantages of the present disclosure will become better understood with reference to the following description, drawings, and claims. The accompanying drawings, which are incorporated in and constitute a part of this specification, illustrate examples of the disclosed technology and, together with the description, serve to explain the principles of the disclosure.

### BRIEF DESCRIPTION OF THE DRAWINGS

FIG. 1 is a cross-sectional schematic illustration of an exemplary turbomachinery engine configured as an open rotor propulsion system.
FIG. 2 is a cross-sectional schematic illustration of an exemplary turbomachinery engine configured as an open rotor propulsion system and comprising a three-stream architecture and one or more heat exchangers in a third stream of the three-stream architecture.
FIG. 3 is a cross-sectional schematic illustration of an exemplary counter-rotating low-pressure turbine of a turbomachinery engine, the low-pressure turbine having a 3x3 configuration.
FIG. 4 is a cross-sectional schematic illustration of an exemplary counter-rotating low-pressure turbine of a turbomachinery engine, the low-pressure turbine having a 4x3 configuration.
FIG. 5 is a cross-sectional schematic illustration of an exemplary gearbox configuration for a turbomachinery engine.
FIG. 6 is a cross-sectional schematic illustration of an exemplary gearbox configuration for a turbomachinery engine.
FIG. 7 is a cross-sectional schematic illustration of an exemplary gearbox configuration for a turbomachinery engine.
FIG. 8 is a cross-sectional schematic illustration of an exemplary gearbox configuration for a turbomachinery engine.
FIG. 9 is a cross-sectional schematic illustration of an exemplary gearbox configuration for a turbomachinery engine.
FIG. 10 is a chart depicting various engine parameters of several exemplary unducted turbomachinery engines comprising a 10 foot fan diameter.
FIG. 11 is a chart depicting various engine parameters of several exemplary unducted turbomachinery engines comprising an 11 foot fan diameter.
FIG. 12 is a chart depicting various engine parameters of several exemplary unducted turbomachinery engines comprising a 12 foot fan diameter.
FIG. 13 is a chart depicting various engine parameters of several exemplary unducted turbomachinery engines comprising a 13 foot fan diameter.
FIG. 14 is a chart depicting various engine parameters of several exemplary unducted turbomachinery engines comprising a 14 foot fan diameter.
FIG. 15 is a chart depicting various engine parameters of several exemplary unducted turbomachinery engines comprising a 15 foot fan diameter.
FIG. 16 is a chart depicting various engine parameters of several exemplary unducted turbomachinery engines comprising a 16 foot fan diameter.
FIG. 17 is a graph depicting an exemplary range of engine correlation parameter relative to an exemplary range of propulsor disk loading for an unducted turbomachinery engine.
FIG. 18 is a graph depicting an exemplary range of engine correlation parameter relative to an exemplary range of propulsor disk loading for an unducted turbomachinery engine.
FIG. 19 is a cross-sectional schematic illustration of an example of a turbomachine engine configured as a ducted propulsion system.
FIG. 20 is a cross-sectional schematic illustration of an example of a turbomachine engine configured as a ducted propulsion system.
FIGS. 21A-21B are charts depicting various engine parameters of several exemplary ducted turbomachinery engines comprising a 7 stage high-pressure compressor.
FIGS. 22A-22B are charts depicting various engine parameters of several exemplary ducted turbomachinery engines comprising an 8 stage high-pressure compressor.
FIGS. 23A-23B are charts depicting various engine parameters of several exemplary ducted turbomachinery engines comprising a 9 stage high-pressure compressor.
FIGS. 24A-24B are charts depicting various engine parameters of several exemplary ducted turbomachinery engines comprising a 10 stage high-pressure compressor.
FIGS. 25A-25B are charts depicting various engine parameters of several exemplary ducted turbomachinery engines comprising an 11 stage high-pressure compressor.

### DETAILED DESCRIPTION

Reference now will be made in detail to embodiments of the disclosed technology, one or more examples of which are illustrated in the drawings. Each example is provided by way of explanation of the disclosed technology, not limitation of the disclosure. In fact, it will be apparent to those skilled in the art that various modifications and variations can be made in the present disclosure without departing from the scope or spirit of the disclosure. For instance, features illustrated or described as part of one example can be used with another example to yield a still further example. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations.

As used herein, the terms "first," "second," and "third" may be used interchangeably to distinguish one component from another and are not intended to signify location or importance of the individual components.

The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values.

Here and throughout the specification and claims, range limitations are combinable and interchangeable, such ranges are identified and include all the sub-ranges contained therein unless context or language indicates otherwise. For example, all ranges disclosed herein are inclusive of the endpoints, and the endpoints are independently combinable with each other.

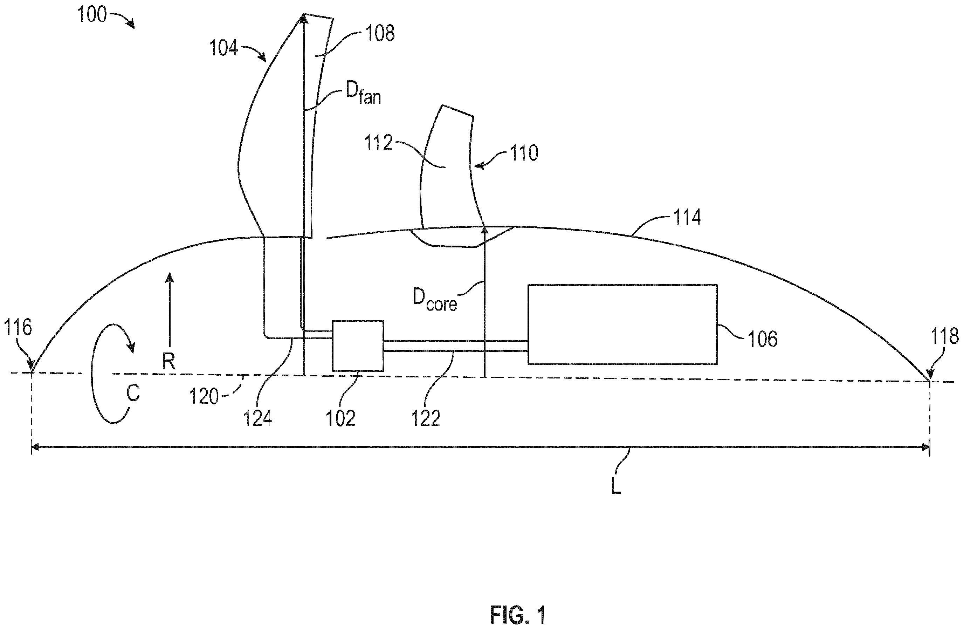

Referring now to the drawings, FIG. 1 is an example of an engine 100 including a gear assembly 102 according to aspects of the present disclosure. The engine 100 includes a fan assembly 104 driven by a core engine 106. In various examples, the core engine 106 is a Brayton cycle system configured to drive the fan assembly 104. The core engine 106 is shrouded, at least in part, by an outer casing 114. The fan assembly 104 includes a plurality of fan blades 108. A vane assembly 110 extends from the outer casing 114 in a cantilevered manner. Thus, the vane assembly 110 can also be referred to as an unducted vane assembly. The vane assembly 110, including a plurality of stationary outlet guide vanes 112, is positioned in operable arrangement with the fan blades 108 to provide thrust, control thrust vector, abate or re-direct undesired acoustic noise, and/or otherwise desirably alter a flow of air relative to the fan blades 108.

In some examples, the fan assembly 104 includes eight (8) to twenty (20) fan blades 108 (which can also be referred to as "propulsor blades"). In particular examples, the fan assembly 104 includes ten (10) to eighteen (18) fan blades 108. In certain examples, the fan assembly 104 includes twelve (12) to sixteen (16) fan blades 108. In some examples, the vane assembly 110 includes three (3) to thirty (30) vanes 112. In certain examples, the vane assembly 110 includes an equal or fewer quantity of vanes 112 to fan blades 108. For example, in particular instances, the engine 100 includes twelve (12) fan blades 108 and ten (10) vanes 112. In other examples, the vane assembly 110 includes a greater quantity of vanes 112 to fan blades 108. For example, in particular instances, the engine 100 includes ten (10) fan blades 108 and twenty-three (23) vanes 112.

In certain examples, such as depicted in FIG. 1, the vane assembly 110 is positioned downstream or aft of the fan assembly 104. However, it should be appreciated that in some examples, the vane assembly 110 may be positioned upstream or forward of the fan assembly 104. In still various examples, the engine 100 may include a first vane assembly positioned forward of the fan assembly 104 and a second vane assembly positioned aft of the fan assembly 104. The fan assembly 104 may be configured to desirably adjust pitch at one or more fan blades 108, such as to control thrust vector, abate or re-direct noise, and/or alter thrust output. The vane assembly 110 may be configured to desirably adjust pitch at one or more vanes 112, such as to control thrust vector, abate or re-direct noise, and/or alter thrust output. Pitch control mechanisms at one or both of the fan assembly 104 or the vane assembly 110 may co-operate to produce one or more desired effects described above.

In certain examples, such as depicted in FIG. 1, the engine 100 is an un-ducted thrust producing system, such that the plurality of fan blades 108 is unshrouded by a nacelle or fan casing. As such, in various examples, the engine 100 may be configured as an unshrouded turbofan engine, an open rotor engine, or a propfan engine. In particular examples, the engine 100 is an unducted rotor engine with a single row of fan blades 108. The fan blades 108 can have a large diameter, such as may be suitable for high bypass ratios, high cruise speeds (e.g., comparable to aircraft with turbofan engines, or generally higher cruise speed than aircraft with turboprop engines), high cruise altitude (e.g., comparable to aircraft with turbofan engines, or generally higher cruise speed than aircraft with turboprop engines), and/or relatively low rotational speeds.

The fan blades 108 comprise a diameter (D_{fan}). It should be noted that for purposes of illustration only half of the D_{fan} is shown (i.e., the radius of the fan). The fan tip diameter (D_{fan}) can be within a range of 8-20 feet. For example, in some instances, the D_{fan} is 10-16 feet. In particular examples the D_{fan} is 11-14 feet. In certain examples, the D_{fan} is 12-13 feet.

In some examples, the fan blade tip speed at a cruise flight condition can be 500 to 900 feet per second (fps), or 700 to 800 fps. The fan can rotate at 400-1200 rpm (or 450-1000 rpm) at a cruise flight condition. A fan pressure ratio (FPR) for the fan assembly 104 can be 1.04 to 1.10, or in some examples 1.05 to 1.08, as measured across the fan blades at a cruise flight condition.

Cruise altitude is generally an altitude at which an aircraft levels after climb and prior to descending to an approach flight phase. In various examples, the engine is applied to a vehicle with a cruise altitude up to approximately 65,000 ft. In certain examples, cruise altitude is between approximately 28,000 ft. and approximately 45,000 ft. In certain examples, a cruise speed is within a range of about 0.6-0.9 Mach (or optionally about 0.7-0.9 Mach). In certain examples, cruise altitude is expressed in flight levels (FL) based on a standard air pressure at sea level, in which a cruise flight condition is between FL280 and FL650. In another example, cruise flight condition is between FL280 and FL450. In certain examples, cruise altitude is defined based at least on a barometric pressure, in which cruise altitude is between approximately 4.85 psia and approximately 0.82 psia based on a sea-level pressure of approximately 14.70 psia and sea-level temperature at approximately 59 degrees Fahrenheit. In another example, cruise altitude is between approximately 4.85 psia and approximately 2.14 psia. It should be appreciated that in certain examples, the ranges of cruise altitude defined by pressure may be adjusted based on a different reference sea-level pressure and/or sea-level temperature.

The core engine 106 is generally encased in outer casing 114 defining one half of a core diameter (D_{core}), which may be thought of as the maximum extent from the centerline axis (datum for R). In certain examples, the engine 100 includes a length (L) from a longitudinally (or axial) forward end 116 to a longitudinally aft end 118. In various examples, the engine 100 defines a ratio of L/D_{core} that provides for reduced installed drag. In one example, L/D_{core} is at least 2. In another example, L/D_{core} is at least 2.5. In some examples, the L/D_{core} is less than 5, less than 4, and less than 3. In various examples, it should be appreciated that the L/D_{core} is for a single unducted rotor engine.

The reduced installed drag may further provide for improved efficiency, such as improved specific fuel consumption. Additionally, or alternatively, the reduced drag may provide for cruise altitude engine and aircraft operation at or above Mach 0.5. In certain examples, the L/D_{core}, the fan assembly 104, and/or the vane assembly 110 separately or together configure, at least in part, the engine 100 to operate at a maximum cruise altitude operating speed between approximately Mach 0.55 and approximately Mach 0.85; or between approximately 0.72 to 0.85 or between approximately 0.75 to 0.85. For example, the engine 100 can be configured to operate at a maximum cruise altitude operating speed between approximately Mach 0.6 and approximately Mach 0.9.

Referring still to FIG. 1, the core engine 106 extends in a radial direction (R) relative to an engine centerline axis 120. The gear assembly 102 receives power or torque from the core engine 106 through a power input source 122 and provides power or torque to drive the fan assembly 104, in a circumferential direction C about the engine centerline axis 120, through a power output source 124.

The gear assembly 102 of the engine 100 can include a plurality of gears, including an input and an output. The gear assembly can also include one or more intermediate gears disposed between and/or interconnecting the input and the output. The input can be coupled to a turbine section of the core engine 106 and can comprise a first rotational speed. The output can be coupled to the fan assembly and can have a second rotational speed. In some examples, a gear ratio of the first rotational speed to the second rotational speed is greater than 4.1 (e.g., within a range of 4.1-14.0).

The gear assembly 102 (which can also be referred to as "a gearbox") can comprise various types and/or configuration. For example, in some instances, the gearbox is an epicyclic gearbox configured in a star gear configuration. Star gear configurations comprise a sun gear, a plurality of star gears (which can also be referred to as "planet gears"), and a ring gear. The sun gear is the input and is coupled to the power turbine (e.g., the low-pressure turbine) such that the sun gear and the power turbine rotate at the same rotational speed. The star gears are disposed between and interconnect the sun gear and the ring gear. The star gears are rotatably coupled to a fixed carrier. As such, the star gears can rotate about their respective axes but cannot collectively orbit relative to the sun gear or the ring gear. As another example, the gearbox is an epicyclic gearbox configured in a planet gear configuration. Planet gear configurations comprise a sun gear, a plurality of planet gears, and a ring gear. The sun gear is the input and is coupled to the power turbine. The planet gears are disposed between and interconnect the sun gear and the ring gear. The planet gears are rotatably coupled to a rotatable carrier. As such, the planet gears can rotate about their respective axes and also collectively rotate together with the carrier relative to the sun gear and the ring gear. The carrier is the output and is coupled to the fan assembly. The ring gear is fixed from rotation.

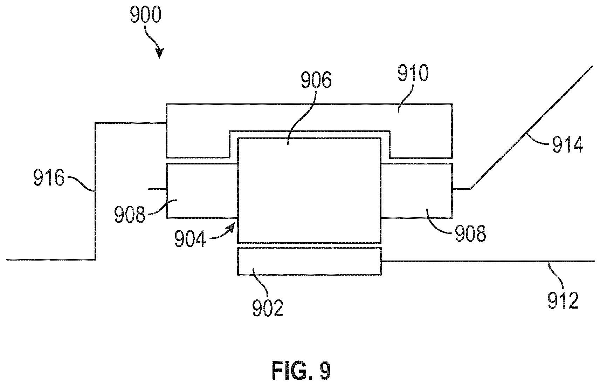

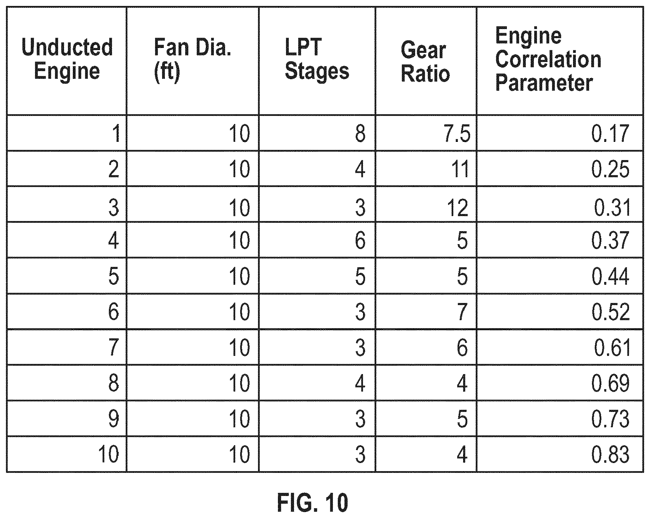

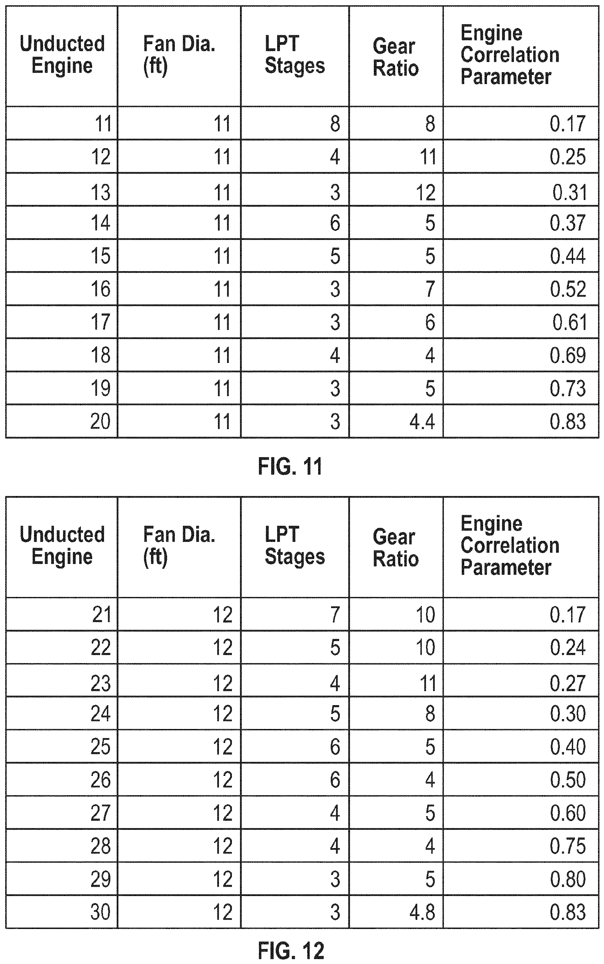

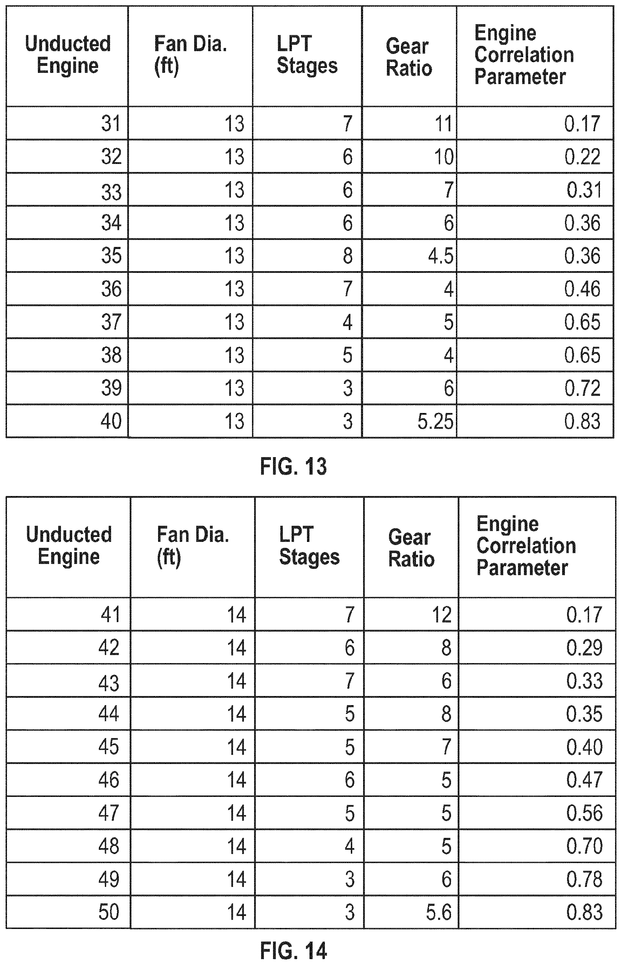

In some examples, the gearbox is a single-stage gearbox (e.g., FIGS. 10-11). In other examples, the gearbox is a multi-stage gearbox (e.g., FIGS. 9 and 12). In some examples, the gearbox is an epicyclic gearbox. In some examples, the gearbox is a non-epicyclic gearbox (e.g., a compound gearbox - FIG. 13).

As noted above, the gear assembly can be used to reduce the rotational speed of the output relative to the input. In some examples, a gear ratio of the input rotational speed to the output rotational speed is greater than 4.1. For example, in particular examples, the gear ratio is within a range of 4.1-14.0, within a range of 4.5-14.0, or within a range of 6.0-14.0. In certain examples, the gear ratio is within a range of 4.5-12 or within a range of 6.0-11.0. As such, in some examples, the fan assembly can be configured to rotate at a rotational speed of 400-1500 rpm at a cruise flight condition, while the power turbine (e.g., the low-pressure turbine) is configured to rotate at a rotational speed of 2,500-15,000 rpm at a cruise flight condition. In particular examples, the fan assembly can be configured to rotate at a rotational speed of 450-1200 rpm at a cruise flight condition, while the power turbine is configured to rotate at a rotational speed of 5,000-10,000 rpm at a cruise flight condition.

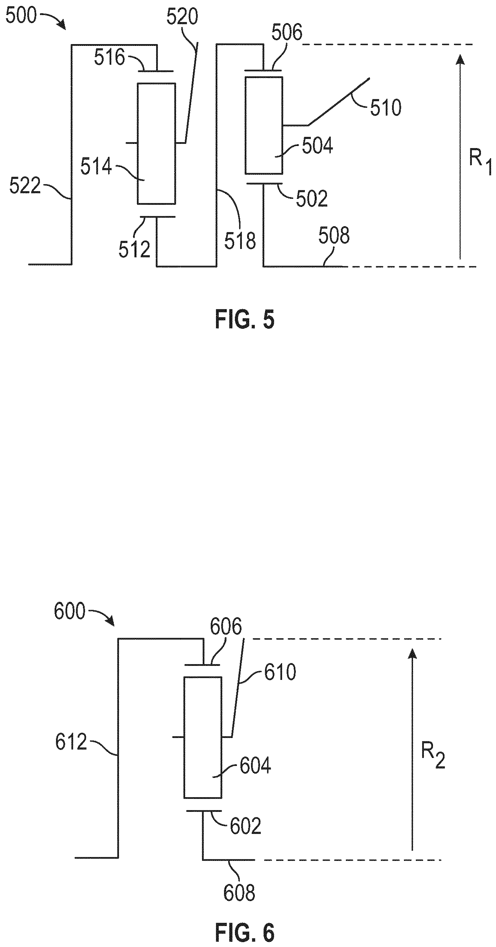

Various gear assembly configurations are depicted schematically in FIGS. 5-9. These gearboxes can be used any of the engines disclosed herein, including the engine 100. Additional details regarding the gearboxes are provided below.

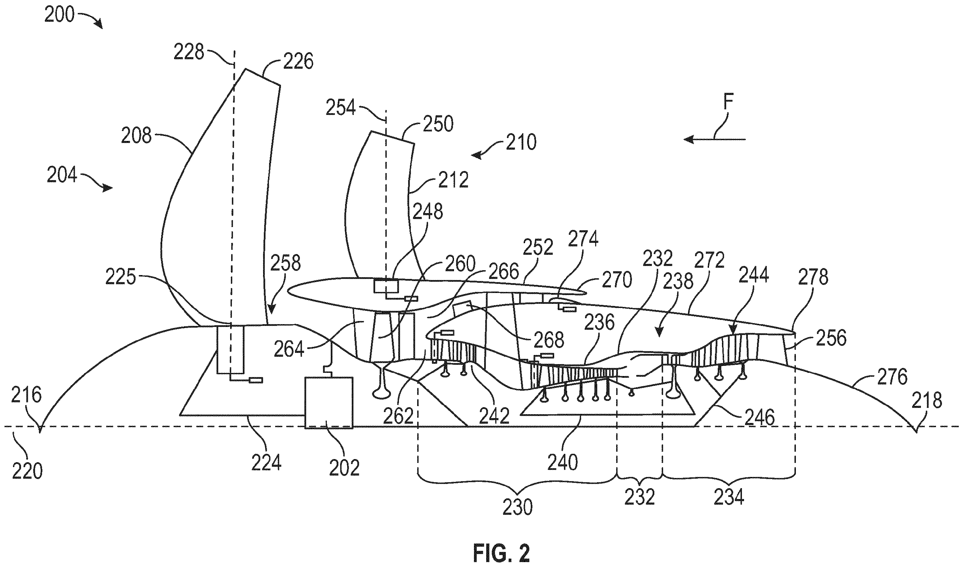

FIG. 2 shows a cross-sectional view of an engine 200, which is configured as an exemplary example of an open rotor propulsion engine. The engine 200 is generally similar to the engine 100 and corresponding components have been numbered similarly. For example, the gear assembly of the engine 100 is numbered "102" and the gear assembly of the engine 200 is numbered "202," and so forth. In addition to the gear assembly 202, the engine 200 comprises a fan assembly 204 that includes a plurality of fan blades 208 distributed around the engine centerline axis 220. Fan blades 208, in some instances, are circumferentially arranged in an equally spaced relation around the engine centerline axis 220, and each fan blade 208 has a root 225 and a tip 226, and an axial span defined therebetween, as well as a central blade axis 228. In other instances, the fan blades can be non-equally spaced.

The core engine 206 includes a compressor section 230, a combustion section 232, and a turbine section 234 (which may be referred to as "an expansion section") together in a serial flow arrangement. The core engine 206 extends circumferentially relative to an engine centerline axis 220. The core engine 206 includes a high-speed spool that includes a high-pressure compressor 236 and a high-pressure turbine 238 operably rotatably coupled together by a high-speed shaft 240. The combustion section 232 is positioned between the high-pressure compressor 236 and the high-pressure turbine 238.

The combustion section 232 may be configured as a deflagrative combustion section, a rotating detonation combustion section, a pulse detonation combustion section, and/or other appropriate heat addition system. The combustion section 232 may be configured as one or more of a rich-burn system or a lean-burn system, or combinations thereof. In still various examples, the combustion section 232 includes an annular combustor, a can combustor, a cannular combustor, a trapped vortex combustor (TVC), or other appropriate combustion system, or combinations thereof.

The core engine 206 also includes a booster or low-pressure compressor positioned in flow relationship with the high-pressure compressor 236. The low-pressure compressor 242 is rotatably coupled with the low-pressure turbine 244 via a low-speed shaft 246 to enable the low-pressure turbine 244 to drive the low-pressure compressor 242. The low-speed shaft 246 is also operably connected to the gear assembly 202 to provide power to the fan assembly 204, such as described further herein.

It should be appreciated that the terms "low" and "high," or their respective comparative degrees (e.g., "lower" and "higher", where applicable), when used with compressor, turbine, shaft, or spool components, each refer to relative pressures and/or relative speeds within an engine unless otherwise specified. For example, a "low spool" or "low-speed shaft" defines a component configured to operate at a rotational speed, such as a maximum allowable rotational speed, lower than a "high spool" or "high-speed shaft" of the engine. Alternatively, unless otherwise specified, the aforementioned terms may be understood in their superlative degree. For example, a "low turbine" or "low-speed turbine" may refer to the lowest maximum rotational speed turbine within a turbine section, a "low compressor" or "low speed compressor" may refer to the lowest maximum rotational speed turbine within a compressor section, a "high turbine" or "high-speed turbine" may refer to the highest maximum rotational speed turbine within the turbine section, and a "high compressor" or "high-speed compressor" may refer to the highest maximum rotational speed compressor within the compressor section. Similarly, the low-speed spool refers to a lower maximum rotational speed than the high-speed spool. It should further be appreciated that the terms "low" or "high" in such aforementioned regards may additionally, or alternatively, be understood as relative to minimum allowable speeds, or minimum or maximum allowable speeds relative to normal, desired, steady state, etc. operation of the engine.

The compressors and/or turbines disclosed herein can include various stage counts. As disclosed herein the stage count includes the number of rotors or blade stages in a particular component (e.g., a compressor or turbine). For example, in some instances, a low-pressure compressor can comprise 1-8 stages, a high-pressure compressor can comprise 8-15 stages, a high-pressure turbine comprises 1-2 stages, and/or a low-pressure turbine comprises 3-8 stages (or optionally 4-8 LPT stages, or optionally 4-6 LPT stages). For example, in certain instances, an engine can comprise a one stage low-pressure compressor, an 11 stage high-pressure compressor, a two stage high-pressure compressor, and a 7 stage low-pressure turbine. As another example, an engine can comprise a three stage low-pressure compressor, a 10 stage high-pressure compressor, a two stage high-pressure compressor, and a 7 stage low-pressure turbine. As yet another example, an engine can comprise a three stage low-pressure compressor, a 10 stage high-pressure compressor, a two stage high-pressure compressor, and a 4 stage low-pressure turbine.

In some examples, a low-pressure turbine is a counter-rotating low-pressure turbine comprising inner blade stages and outer blade stages. The inner blade stages extend radially outwardly from an inner shaft, and the outer blade stages extend radially inwardly from an outer drum. In particular examples, the counter-rotating low-pressure turbine comprises three inner blade stages and three outer blade stages, which can collectively be referred to as a six stage low-pressure turbine. In other examples, the counter-rotating low-pressure turbine comprises four inner blade stages and three outer blade stages, which can be collectively be referred to as a seven stage low-pressure turbine.

As discussed in more detail below, the core engine 206 includes the gear assembly 202 that is configured to transfer power from the turbine section 234 and reduce an output rotational speed at the fan assembly 204 relative to the low-pressure turbine 244. Examples of the gear assembly 202 depicted and described herein can allow for gear ratios suitable for large-diameter unducted fans (e.g., gear ratios of 4.1-14.0, 4.5-14.0, and/or 6.0-14.0). Additionally, examples of the gear assembly 202 provided herein may be suitable within the radial or diametrical constraints of the core engine 206 within the outer casing 214.

Various gearbox configurations are depicted schematically in FIGS. 5-9. These gearboxes can be used in any of the engines disclosed herein, including the engine 200. Additional details regarding the gearboxes are provided below.

Engine 200 also includes a vane assembly 210 comprising a plurality of vanes 212 disposed around engine centerline axis 220. Each vane 212 has a root 248 and a tip 250, and a span defined therebetween. Vanes 212 can be arranged in a variety of manners. In some implementations, for example, they are not all equidistant from the rotating assembly.

In some examples, vanes 212 are mounted to a stationary frame and do not rotate relative to the engine centerline axis 220, but may include a mechanism for adjusting their orientation relative to their axis 254 and/or relative to the fan blades 208. For reference purposes, FIG. 2 depicts a forward direction denoted with arrow F, which in turn defines the forward and aft portions of the system.

As depicted in FIG. 2, the fan assembly 204 is located forward of the core engine 106 with the exhaust 256 located aft of core engine 206 in a "puller" configuration. Other configurations are possible and contemplated as within the scope of the present disclosure, such as what may be termed a "pusher" configuration where the engine core is located forward of the fan assembly. The selection of "puller" or "pusher" configurations may be made in concert with the selection of mounting orientations with respect to the airframe of the intended aircraft application, and some may be structurally or operationally advantageous depending upon whether the mounting location and orientation are wing-mounted, fuselage-mounted, or tail-mounted configurations.

Left- or right-handed engine configurations, useful for certain installations in reducing the impact of multi-engine torque upon an aircraft, can be achieved by mirroring the airfoils (e.g., 208, 212) such that the fan assembly 204 rotates clockwise for one propulsion system and counterclockwise for the other propulsion system. Alternatively, an optional reversing gearbox can be provided to permits a common gas turbine core and low-pressure turbine to be used to rotate the fan blades either clockwise or counterclockwise, i.e., to provide either left- or right-handed configurations, as desired, such as to provide a pair of oppositely-rotating engine assemblies can be provided for certain aircraft installations while eliminating the need to have internal engine parts designed for opposite rotation directions.

The engine 200 also includes the gear assembly 202 which includes a gear set for decreasing the rotational speed of the fan assembly 204 relative to the low-pressure turbine 244. In operation, the rotating fan blades 208 are driven by the low-pressure turbine 244 via gear assembly 202 such that the fan blades 208 rotate around the engine centerline axis 220 and generate thrust to propel the engine 200, and hence an aircraft on which it is mounted, in the forward direction F.

In some examples, a gear ratio of the input rotational speed to the output rotational speed is greater than 4.1. For example, in particular implementations, the gear ratio is within a range of 4.1-14.0, within a range of 4.5-14.0, or within a range of 6.0-14.0. In certain examples, the gear ratio is within a range of 4.5-12 or within a range of 6.0-11.0. As such, in some examples, the fan assembly can be configured to rotate at a rotational speed of 400-1500 rpm at a cruise flight condition, while the power turbine (e.g., the low-pressure turbine) is configured to rotate at a rotational speed of 5,000-10,000 rpm at a cruise flight condition. In particular examples, the fan assembly can be configured to rotate at a rotational speed of 450-1200 rpm at a cruise flight condition, while the power turbine is configured to rotate at a rotational speed of 5,500-9,500 rpm a cruise flight condition.

It may be desirable that either or both of the fan blades 208 or the vanes 212 to incorporate a pitch change mechanism such that the blades can be rotated with respect to an axis of pitch rotation (annotated as 228 and 254, respectively) either independently or in conjunction with one another. Such pitch change can be utilized to vary thrust and/or swirl effects under various operating conditions, including to provide a thrust reversing feature which may be useful in certain operating conditions such as upon landing an aircraft.

Vanes 212 can be sized, shaped, and configured to impart a counteracting swirl to the fluid so that in a downstream direction aft of both fan blades 208 and vanes 212 the fluid has a greatly reduced degree of swirl, which translates to an increased level of induced efficiency. Vanes 212 may have a shorter span than fan blades 208, as shown in FIG. 2. For example, vanes 212 may have a span that is at least 50% of a span of fan blades 208. In some examples, the span of the vanes can be the same or longer than the span as fan blades 208, if desired. Vanes 212 may be attached to an aircraft structure associated with the engine 200, as shown in FIG. 2, or another aircraft structure such as a wing, pylon, or fuselage. Vanes 212 may be fewer or greater in number than, or the same in number as, the number of fan blades 208. In some examples, the number of vanes 212 are greater than two, or greater than four, in number. Fan blades 208 may be sized, shaped, and contoured with the desired blade loading in mind.

In the example shown in FIG. 2, an annular 360-degree inlet 258 is located between the fan assembly 204 and the vane assembly 210 and provides a path for incoming atmospheric air to enter the core engine 206 radially inwardly of at least a portion of the vane assembly 210. Such a location may be advantageous for a variety of reasons, including management of icing performance as well as protecting the inlet 258 from various objects and materials as may be encountered in operation.

In the example of FIG. 2, in addition to the open rotor or unducted fan assembly 204 with its plurality of fan blades 208, an optional ducted fan assembly 260 is included behind fan assembly 204, such that the engine 200 includes both a ducted and an unducted fan which both serve to generate thrust through the movement of air at atmospheric temperature without passage through the core engine 206. The ducted fan assembly 260 is shown at about the same axial location as the vane 212, and radially inward of the root 248 of the vane 212. Alternatively, the ducted fan assembly 260 may be between the vane 212 and core duct 262 or may be farther forward of the vane 212. The ducted fan assembly 260 may be driven by the low-pressure turbine 244, or by any other suitable source of rotation, and may serve as the first stage of the low-pressure compressor 242 or may be operated separately. Air entering the inlet 258 flows through an inlet duct 264 and then is divided such that a portion flows through a core duct 262 and a portion flows through a fan duct 266. Fan duct 266 may incorporate one or more heat exchangers 268 and exhausts to the atmosphere through an independent fixed or variable nozzle 270 aft of the vane assembly 210, at the aft end of the fan cowl 252 and outside of the engine core cowl 272. Air flowing through the fan duct 266 thus "bypasses" the core of the engine and does not pass through the core.

Thus, in the example, engine 200 includes an unducted fan formed by the fan blades 208, followed by the ducted fan assembly 260, which directs airflow into two concentric or non-concentric ducts 262 and 266, thereby forming a "three-stream engine architecture" with three paths for air which passes through the fan assembly 204. The "first stream" of the engine 200 comprises airflow that passes through the vane assembly 210 and/or outside the fan cowl 252. As such, the first stream can be referred to as "the bypass stream" since the airflow of the first stream does not pass through the core duct 262. The first stream produces the majority of the thrust of the engine 200 and can thus also be referred to as "the primary propulsion stream." The "second stream" of the engine 200 comprises the airflow that flows into the inlet 258, through the inlet duct 264, through the core duct 262, and exits the core nozzle 278. In this manner, the second stream can be referred to as "the core stream." The "third stream" of the engine 200 comprises the airflow that flows into the inlet 258, through the inlet duct 264, through the fan duct 266, and exits the nozzle 270.

A "third stream" as used herein means a secondary air stream capable of increasing fluid energy to produce a minority of the total thrust of an engine (e.g., the engine 200). Accordingly, in various examples, the fan duct 266, having the one or heat exchangers 268 located within the flowpath of the fan duct 266, may be referred to as the "third-stream" of the three-stream engine architecture.

The pressure ratio of the third stream is higher than that of the primary propulsion stream (i.e., the bypass stream). This thrust is produced through a dedicated nozzle (e.g., the nozzle 270) or through mixing of the third stream with a fan stream or a core stream (e.g., into a common nozzle). In certain examples the operating temperature of an airflow through the third stream is less than a maximum compressor discharge temperature for the engine, and more specifically may be less than 350 degrees Fahrenheit (such as less than 300 degrees Fahrenheit, such as less than 250 degrees Fahrenheit, such as less than 200 degrees Fahrenheit, and at least as great as an ambient temperature). In certain examples these operating temperatures facilitate the heat transfer to or from the fluid in the third stream and a secondary fluid stream. Further, in certain examples, the airflow through the third stream may contribute less than 50% of the total engine thrust (and at least, e.g., 2% of the total engine thrust), and at a takeoff condition, or more particularly while operating at a rated takeoff power at sea level, static flight speed, 86 degrees Fahrenheit ambient temperature operating conditions. Furthermore, in certain examples the airstream, mixing, or exhaust properties (and thereby the aforementioned exemplary percent contribution to total thrust) of the third stream may passively adjust during engine operation or be modified purposefully through use of engine control features (such as fuel flow, electric machine power, variable stators, variable inlet guide vanes, valves, variable exhaust geometry, or fluidic features) to adjust or optimize overall system performance across a broad range of potential operating conditions.

In the example shown in FIG. 2, a slidable, moveable, and/or translatable plug nozzle 274 with an actuator may be included in order to vary the exit area of the nozzle 270. A plug nozzle is typically an annular, symmetrical device which regulates the open area of an exit such as a fan stream or core stream by axial movement of the nozzle such that the gap between the nozzle surface and a stationary structure, such as adjacent walls of a duct, varies in a scheduled fashion thereby reducing or increasing a space for airflow through the duct. Other suitable nozzle designs may be employed as well, including those incorporating thrust reversing functionality. Such an adjustable, moveable nozzle may be designed to operate in concert with other systems such as VBV's, VSV's, or blade pitch mechanisms and may be designed with failure modes such as fully-open, fully-closed, or intermediate positions, so that the nozzle 270 has a consistent "home" position to which it returns in the event of any system failure, which may prevent commands from reaching the nozzle 270 and/or its actuator. In other examples, a static nozzle may be utilized.

In some examples, a mixing device 276 can be included in a region aft of a core nozzle 278 to aid in mixing the fan stream and the core stream to improve acoustic performance by directing core stream outward and fan stream inward.

Since the engine 200 shown in FIG. 2 includes both an open rotor fan assembly 204, a ducted fan assembly 260, and the third stream, the engine's thrust output and work split can be tailored to achieve specific thrust, fuel burn, thermal management, and/or acoustic signature objectives which may be superior to those of a typical ducted or unducted fan gas turbine propulsion assembly of comparable thrust class.

Operationally, the engine 200 may include a control system that manages the loading of the respective open and ducted fans, as well as potentially the exit area of the variable fan nozzle, to provide different thrust, noise, cooling capacity and other performance characteristics for various portions of the flight envelope and various operational conditions associated with aircraft operation. For example, in climb mode the ducted fan may operate at maximum pressure ratio there-by maximizing the thrust capability of stream, while in cruise mode, the ducted fan may operate a lower pressure ratio, raising overall efficiency through reliance on thrust from the unducted fan. Nozzle actuation modulates the ducted fan operating line and overall engine fan pressure ratio independent of total engine airflow. In other examples, loading may be managed using a static nozzle.

As noted above, the third stream (e.g., the fan duct 266) may include one or more heat exchangers 268 for removing heat from various fluids used in engine operation (such as an air-cooled oil cooler (ACOC), cooled cooling air (CCA), etc.). Heat exchangers 268 located in the third stream take advantage of the integration into the fan duct 266 (i.e., the third stream) with reduced performance penalties (such as fuel efficiency and thrust) compared with traditional ducted fan architectures, due to not impacting the primary source of thrust which is, in this case, the unducted fan stream. Heat exchangers may cool fluids such as gearbox oil, engine sump oil, thermal transport fluids such as supercritical fluids or commercially available single-phase or two-phase fluids (supercritical CO2, EGV, Slither 800, liquid metals, etc.), engine bleed air, etc. Heat exchangers may also be made up of different segments or passages that cool different working fluids, such as an ACOC paired with a fuel cooler. Heat exchangers 268 may be incorporated into a thermal management system which provides for thermal transport via a heat exchange fluid flowing through a network to remove heat from a source and transport it to a heat exchanger.

The third stream can provide advantages in terms of reduced nacelle drag, enabling a more aggressive nacelle close-out, improved core stream particle separation, and inclement weather operation. By exhausting the fan duct flow over the core cowl, this aids in energizing the boundary layer and enabling the option of a steeper nacelle close out angle between the maximum dimension of the engine core cowl 272 and the exhaust 256. The close-out angle is normally limited by air flow separation, but boundary layer energization by air from the fan duct 266 exhausting over the core cowl reduces air flow separation. This yields a shorter, lighter structure with less frictional surface drag.

The vane assembly can be shrouded or unshrouded (as shown in FIGS. 1 and 2). Although not shown, an optional annular shroud or duct can be coupled to the vane assembly 210 and located distally from the engine centerline axis 220 relative to the vanes 212. In addition to the noise reduction benefit, the duct may provide improved vibratory response and structural integrity of the vanes 212 by coupling them into an assembly forming an annular ring or one or more circumferential sectors, i.e., segments forming portions of an annular ring linking two or more of the vanes 212. The duct may also allow the pitch of the vanes to be varied more easily.

In some examples, the net thrust T of the engine is within a range of about 10,000-100,000 pounds force at a max takeoff condition. In particular examples, the net thrust T of the engine is within a range of about 12,000-35,000 pounds force at a max takeoff condition.

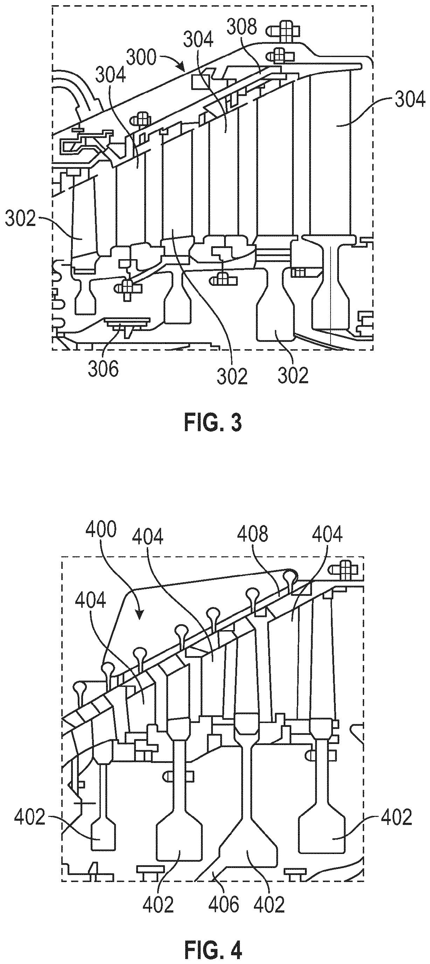

In some examples, an engine (e.g., the engine 100 and/or the engine 200) can comprise a counter-rotating low-pressure turbine. For example, FIGS. 3-4 depict schematic cross-sectional illustrations of counter-rotating low-pressure turbines. In particular, FIG. 3 depicts a counter-rotating turbine 300, and FIG. 4 depicts a counter-rotating turbine 400. The counter-rotating turbines comprise inner blade stages and outer blade stages arranged in an alternating inner-outer configuration. In other words, the counter-rotating turbines do not comprise stator vanes disposed between the blade stages.

Referring to FIG. 3, the counter-rotating turbine 300 comprises a plurality of inner blade stages 302 and a plurality of outer blade stages 304. More specifically, the counter-rotating turbine 300 includes three inner blades stages 302 that are coupled to and extend radially outwardly from an inner shaft 306 (which can also be referred to as "an inner rotor") and three outer blade stages 304 that are coupled to extend radially inwardly from an outer shaft 308 (which can also be referred to as "an outer drum" or "an outer rotor"). In this manner, the counter-rotating turbine 300 can be considered a six stage turbine. It should be noted, however, that the counter-rotating turbine 300 would be considered to have three LPT stages, N_{LPT}, for purposes of determining an engine correlation parameter (ECP) or a ducted engine correlation parameter (DECP) described below because there are three inner blade stages 302.

Referring to FIG. 4, the counter-rotating turbine 400 comprises a plurality of inner blade stages 402 and a plurality of outer blade stages 404. More specifically, the counter-rotating turbine 400 includes four inner blades stages 402 that are coupled to and extend radially outwardly from an inner shaft 406 and three outer blade stages 404 that are coupled to extend radially inwardly from an outer shaft 408. In this manner, the counter-rotating turbine 400 can be considered a seven stage turbine. It should be noted, however, that the counter-rotating turbine 400 would be considered to have four LPT stages, N_{LPT}, for purposes of determining the engine correlation parameter (ECP) or a ducted engine correlation parameter (DECP) described below because there are three inner blade stages 402.

According to some examples there is a turbomachinery characterized by a high gear ratio. A high gear ratio gearbox means a gearbox with a gear ratio of above about 4:1 to about 14:1 (or about 4.5:1 to about 12:1 in particular examples). For example, the engines disclosed herein can include a gearbox configured such the output speed (i.e., the speed of the propulsor) is about 400-1200 rpm at a cruise flight condition, or more particularly 450-1000 rpm at a cruise flight condition.

Various exemplary gear assemblies are shown and described herein. In particular, FIGS. 5-9 schematically depict several exemplary gear assemblies that can be used with the engines 100, 200. The disclosed gear assemblies may be utilized with any of the exemplary engines and/or any other suitable engine for which such gear assemblies may be desirable. In such a manner, it will be appreciated that the gear assemblies disclosed herein may generally be operable with an engine having a rotating element with a plurality of rotor blades and a turbomachinery having a turbine and a shaft rotatable with the turbine. With such an engine, the rotating element (e.g., fan assembly 104) may be driven by the shaft (e.g., low-speed shaft) of the turbomachinery through the gear assembly.

Although the exemplary gear assemblies shown are mounted at a forward location (e.g., forward from the combustor and/or the low-pressure compressor), in other examples, the gear assemblies described herein can be mounted at an aft location (e.g., aft of the combustor and/or the low-pressure turbine).

Various examples of the gear assembly provided herein may allow for gear ratios of up to 14:1. Still various examples of the gear assemblies provided herein may allow for gear ratios of at least 4.1: 1 or 4.5:1. Still yet various examples of the gear assemblies provided herein allow for gear ratios of 6:1 to 12:1.

FIG. 5 schematically depicts a gearbox 500 that can be used, for example, engines 100, 200. The gearbox 500 comprises a two-stage star configuration.

The first stage of the gearbox 500 includes a first-stage sun gear 502, a first-stage carrier 504 housing a plurality of first-stage star gears, and a first-stage ring gear 506. The first-stage sun gear 502 can be coupled to a low-speed shaft 508, which in turn is coupled to the low-pressure turbine the engine. The first-stage sun gear 502 can mesh with the first-stage star gears, which mesh with the first-stage ring gear. The first-stage carrier 504 can be fixed from rotation by a support member 510.

The second stage of the gearbox 500 includes a second-stage sun gear 512, a second-stage carrier 514 housing a plurality of second-stage star gears, and a second-stage ring gear 516. The second-stage sun gear 512 can be coupled to a shaft 518 which in turn is coupled to the first-stage ring gear 506. The second-stage carrier 514 can be fixed from rotation by a support member 520. The second-stage ring gear 516 can be coupled to a fan shaft 522.

In some examples, each stage of the gearbox 500 can comprise five star gears. In other examples, the gearbox 500 can comprise fewer or more than five star gears in each stage. In some examples, the first-stage carrier can comprise a different number of star gears than the second-stage carrier. For example, the first-carrier can comprise five star gears, and the second-stage carrier can comprise three star gears, or vice versa.

In some examples, the radius R₁ of the gearbox 500 can be about 16-19 inches. In other examples, the radius R₁ of the gearbox 500 can be about 22-24 inches. In other examples, the radius R₁ of the gearbox 500 can be smaller than 16 inches or larger than 24 inches.

FIG. 6 schematically depicts a gearbox 600 that can be used with the engines disclosed herein. The gearbox 600 comprises a single-stage star configuration. The gearbox 600 includes a sun gear 602, a carrier 604 housing a plurality of star gears (e.g., 3-5 star gears), and a ring gear 606. The sun gear 602 can mesh with the star gears, and the star gears can mesh with the ring gear 606. The sun gear 602 can be coupled to a low-speed shaft 608, which in turn is coupled to the low-pressure turbine of the engine. The carrier 604 can be fixed from rotation by a support member 610. The ring gear 606 can be coupled to a fan shaft 612.

In some examples, the radius R₂ of the gearbox 600 can be about 18-23 inches. In other examples, the radius R₂ of the gearbox 600 can be smaller than 18 inches or larger than 23 inches.

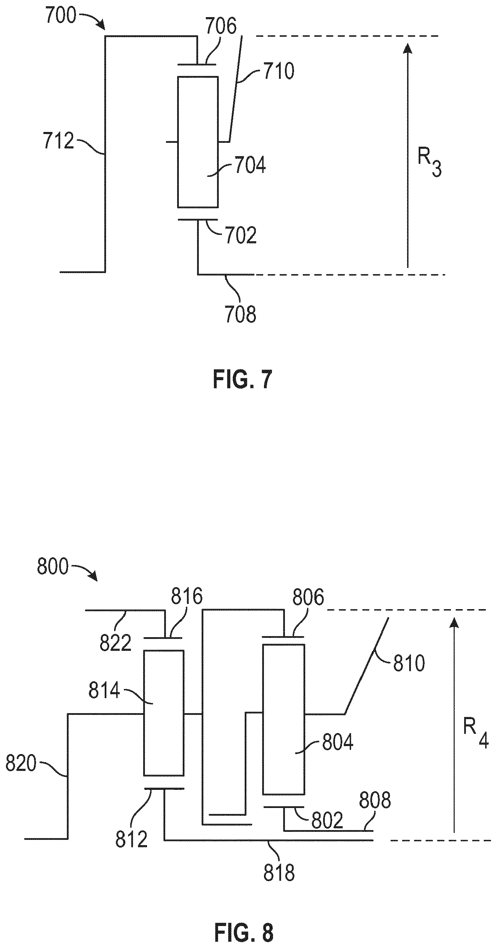

FIG. 7 schematically depicts another exemplary gearbox 700. The gearbox 700 comprises a single-stage star configuration. The gearbox 700 includes a sun gear 702, a carrier 704 housing a plurality of star gears (e.g., 3-5 star gears), and a ring gear 706. The sun gear 702 can mesh with the star gears, and the star gears can mesh with the ring gear 706. The sun gear 702 can be coupled to a low-speed shaft 708, which in turn is coupled to the low-pressure turbine of the engine. The carrier 704 can be fixed from rotation by a support member 710. The ring gear 706 can be coupled to a fan shaft 712.

The gearbox 700 can comprise a radius R₃. In some examples, the radius R₃ of the gearbox 700 can be about 10-13 inches. In other examples, the radius R₃ of the gearbox 700 can be smaller than 10 inches or larger than 13 inches.

FIG. 8 schematically depicts a gearbox 800 that can be used with the engines disclosed herein. The gearbox 800 comprises a two-stage configuration in which the first stage is a star configuration and the second stage is a planet configuration.

The first stage of the gearbox 800 includes a first-stage sun gear 802, a first-stage star carrier 804 comprising a plurality of first-stage star gears (e.g., 3-5 star gears), and a first-stage ring gear 806. The first-stage sun gear 802 can mesh with the first-stage star gears, and the first-stage star gears can mesh with the first-stage ring gear 806. The first-stage sun gear 802 can be coupled to a higher-speed shaft 808 of the low spool, which in turn is coupled to the inner blades of the low-pressure turbine of the engine. The first-stage star carrier 804 can be fixed from rotation by a support member 810.

The second stage of the gearbox 800 includes a second-stage sun gear 812, a second-stage planet carrier 814 comprising a plurality of second-stage planet gears (e.g., 3-5 planet gears), and a second-stage ring gear 816. The second-stage sun gear 812 can mesh with the second-stage planet gears. The second-stage planet carrier 814 can be coupled to the first-stage ring gear 806. The second-stage sun gear 812 can be coupled to a lower-speed shaft 818 of the low spool, which in turn is coupled to the outer blades of the low-pressure turbine of the engine. The second-stage planet carrier 814 can be coupled to the first-stage ring gear 806. The second-stage planet carrier 814 can also be coupled to a fan shaft 820. The second-stage ring gear 816 can be fixed from rotation by a support member 822.

In some examples, each stage of the gearbox 800 can comprise three star/planet gears. In other examples, the gearbox 800 can comprise fewer or more than three star/planet gears in each stage. In some examples, the first-stage carrier can comprise a different number of star gears than the second-stage carrier has planet gears. For example, the first-carrier can comprise five star gears, and the second-stage carrier can comprise three planet gears, or vice versa.

Since the first stage of the gearbox 800 is coupled to the higher-speed shaft 808 of the low spool and the second stage of the gearbox 800 is coupled to the lower-speed shaft 818 of the low spool, the gear ratio of the first stage of the gearbox 800 can be greater than the gear ratio of the second stage of the gearbox. For example, in certain instances, the first stage of the gearbox 800 can comprise a gear ratio of 4.1-14, and the second stage of the gearbox 800 can comprise a gear ratio that is less than the gear ratio of the first stage of the gearbox. In particular examples, the first stage of the gearbox 800 can comprise a gear ratio of 7, and the second stage of the gearbox 800 can comprise a gear ratio of 6.

In some examples, an engine comprising the gearbox 800 can be configured such that the higher-speed shaft 808 provides about 50% of the power to the gearbox 800 and the lower-speed shaft 818 provides about 50% of the power to the gearbox 800. In other examples, an engine comprising the gearbox 800 can be configured such that the higher-speed shaft 808 provides about 60% of the power to the gearbox 800 and the lower-speed shaft 818 provides about 40% of the power to the gearbox 800.

In some examples, a radius R₄ of the gearbox 800 can be about 18-22 inches. In other examples, the radius R₄ of the gearbox 800 can be smaller than 18 inches or larger than 22 inches.

FIG. 9 depicts a gearbox 900 that can be used, for example, with the engines disclosed herein (e.g., the engines 100, 200). The gearbox 900 is configured as a compound star gearbox. The gearbox 900 comprises a sun gear 902 and a star carrier 904, which includes a plurality of compound star gears having one or more first portions 906 and one or more second portions 908. The gearbox 900 further comprises a ring gear 910. The sun gear 902 can also mesh with the first portions 906 of the star gears. The star carrier can be fixed from rotation via a support member 914. The second portions 908 of the star gears can mesh with the ring gear 910. The sun gear 902 can be coupled to a low-pressure turbine via the turbine shaft 912. The ring gear 910 can be coupled to a fan shaft 916.

Some of the examples of turbomachinery disclosed herein utilize an open rotor (also referred to as an "unducted propulsor") and a gearbox. Adoption of a geared, open rotor engine presents unique challenges. One such challenge is finding the appropriate balance between engine performance, engine efficiency, propulsor sizing, and/or acoustics (e.g., noise). For example, if the propulsor is larger than a certain diameter, engine performance may be satisfactory, but the engine will not fit on the airframe. If the fan is smaller, engine performance may be less than desirable. If other criteria are met, the engine may still be too noisy to comply with regulations and/or would create a poor experience for individuals flying on the aircraft.

Starting from this basis, the various demands for an unducted propulsor were calculated. During the process of developing the aforementioned examples of turbomachinery incorporating an unducted propulsor and a gearbox, it was discovered, unexpectedly, that a good approximation for an overall geared, unducted propulsor engine design can be made using only a relatively few engine parameters. This development is based on, among other things, the recognition of a relationship between the propulsor, the LPT, and the gearbox. From this initial recognition and other developments that were the by-product of studying a plurality of engine configurations (including the configurations disclosed herein), it was ultimately discovered that a good approximation for overall engine performance, efficiency, sizing, and acoustics could be made based on a relationship among the fan diameter, the number of LPT stages, and the gear ratio of the gearbox. This relationship is referred to as an engine correlation parameter (ECP).

ECP is quite beneficial. For example, the ECP can provide an engine that is has adequate performance, efficiency, size, and acoustics. Therefore, the ECP can improve the process of developing an unducted engine, which can ultimately result in improved turbomachinery. For example, by defining the engine architecture using the ECP, a better appreciation may be gained for the affected systems or subsystems, reliability or feasibility, and/or range of possible architectures because the ECP imposes practical limits on designs under consideration.

The ECP is defined by the following relationship: D/N_{LPT}/GR, where D is the fan blade tip diameter measured in feet, where N_{LPT} is the stage count of the low-pressure turbine, and where GR is the gear ratio of the gearbox. The ECP can be used, for example, to configure an engine with greater efficiency and lower noise than typical engines. In some instances, the engines disclosed herein comprising the ECP are lighter, have greater propulsive efficiency, have greater engine efficiency, and/or are quieter than typical engines. The ECP thus provides improved turbomachinery engines and/or can help simplify one or more complexities of geared, open rotor engine development.

Specifically, it was discovered that an ECP, equal to the propulsor (e.g., fan) blade tip diameter (in feet) divided by the gear ratio divided by the low pressure turbine stage count, between about 0.17 feet and about 0.83 feet for a single unducted rotor engine (e.g., the engines 100, 200) provide improved results during operation. More specifically, in at least certain examples, a single unducted rotor engine having an ECP between about 0.17 feet and about 0.63 feet may provide for desired results during operation. For simplity, a ECP value my be expressed as unitless value (i.e., omitting "feet"). For example, an ECP of 0.19 feet may simply be expressed as 0.19.

For instance, in one example, a geared, single unducted rotor engine can comprise a propulsor blade diameter of 18 feet, a gear ratio of 10:1, and an LPT stage count equal to 3. In such an example, the ECP is equal to 0.6.

As another example, a geared, single unducted rotor engine can comprise a propulsor blade diameter of 14 feet, may have a gear ratio of 7:1, and an LPT stage count equal to 5. In this example, the ECP is equal to 0.4.

FIGS. 10-16 depict tables with additional exemplary engines and their associated ECPs. The engines disclosed in the tables of FIGS. 10-16 (are elsewhere in this disclosure) are merely examples are not intended to limit the scope of the disclosure.

FIG. 10 depicts various engines (i.e., engines 1-10) each comprising a fan diameter of 10 feet. The LPT stages of each engine 1-10 is within a range of 3-8. The gear ratio of each engine 1-10 is within a range of 4-12. The ECP for each engine 1-10 is within a range of 0.17 and 0.83.

FIG. 11 depicts various engines (i.e., engines 11-20) each comprising a fan diameter of 11 feet. The LPT stages of each engine 11-20 is within a range of 3-8. The gear ratio of each engine 11-20 is within a range of 4-12. The ECP for each engine 11-20 is within a range of 0.17 and 0.83.

FIG. 12 depicts various engines (i.e., engines 21-30) comprising fan diameters of 12 feet. The LPT stages of engines 21-30 are within a range of 3-7. The gear ratios of engines 21-30 are within a range of 4-11. The ECPs for engines 21-30 are within a range of 0.17 and 0.83.

FIG. 13 depicts various engines (i.e., engines 31-40) each comprising a fan diameter of 13 feet. The LPT stages of each engine 31-40 is within a range of 3-8. The gear ratio of each engine 31-40 is within a range of 4-11. The ECP for each engine 31-40 is within a range of 0.17 and 0.83.

FIG. 14 depicts various engines (i.e., engines 41-50) comprising fan diameters of 14 feet. The LPT stages of engines 41-50 are within a range of 3-7. The gear ratios of engines 41-50 are within a range of 5-12. The ECPs for engines 41-50 are within a range of 0.17 and 0.83.

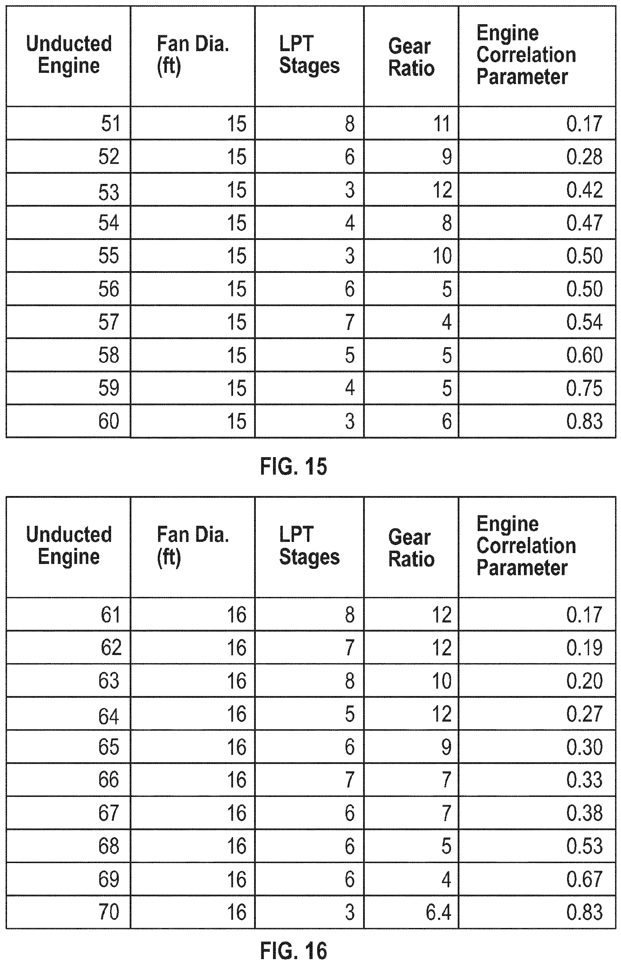

FIG. 15 depicts various engines (i.e., engines 51-60) each comprising a fan diameter of 15 feet. The LPT stages of each engine 51-60 is within a range of 3-8. The gear ratio of each engine 51-60 is within a range of 4-12. The ECP for each engine 51-60 is within a range of 0.17 and 0.83.

FIG. 16 depicts various engines (i.e., engines 61-70) comprising fan diameters of 16 feet. The LPT stages of engines 61-70 are within a range of 3-8. The gear ratios of engines 61-70 are within a range of 4-12. The ECPs for engines 61-70 are within a range of 0.17 and 0.83.

It should be noted that, although the exemplary engines 1-70 comprise fan diameters that are whole numbers (e.g., 10 ft, 11 ft, 12 ft, 14 ft, etc.), an engine can comprise a fan diameter that is not a whole number. For example, a fan can comprise a diameter of 11.5 ft, 12.75 ft, 13.2 ft, 14.1 ft, 15.56 ft, or 16.3 ft.

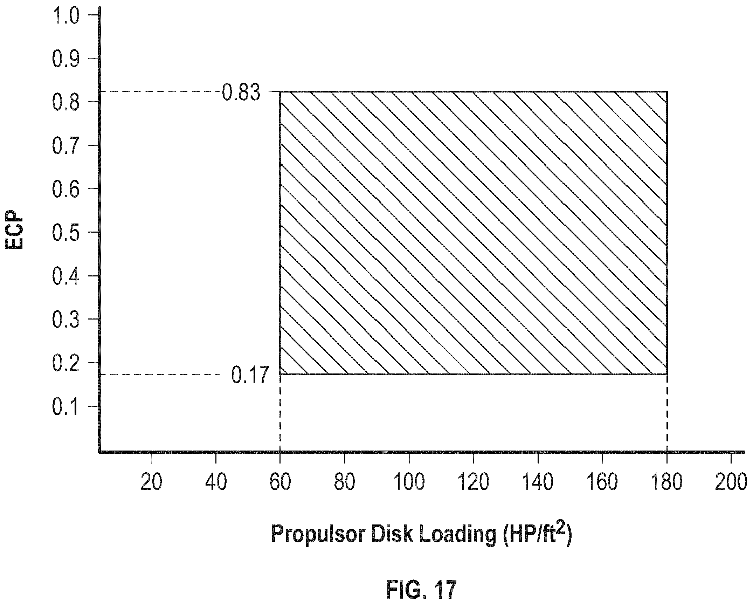

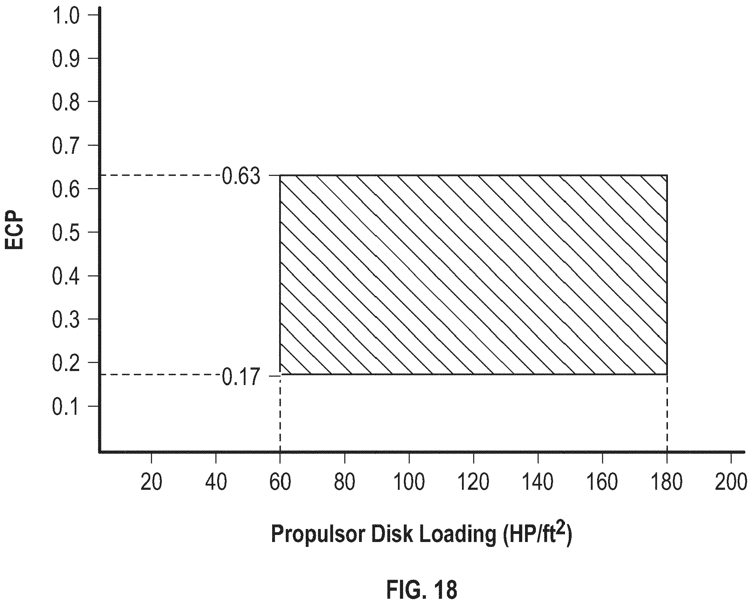

A relationship between ECP and the disk loading of the propulsor was discovered. Disk loading is the power at a takeoff flight condition measured in horsepower (HP) divided by the swept area of the propulsor measured in square feet (ft²). For example, it was discovered that it is advantageous for an engine to comprise an ECP of 0.17-0.83 and a propulsor disk loading between 60-180 HP/ft² at a takeoff flight condition, as depicted in FIG. 17. More particularly, it was discovered that it is particularly advantageous for an engine to comprise an ECP of 0.17-0.63 and a propulsor disk loading between 60-180 HP/ft² at a takeoff flight condition, as depicted in FIG. 18. An engine with an ECP within a range of 0.17-0.83 ft (or 0.17-0.63 ft) and a propulsor disk loading of 60-180 HP/ft² at a takeoff flight condition can, for example, advantageously provide improved engine performance and efficiency compared to typical engines, while also satisfying the acoustics requirements.

In some examples, a propulsor assembly of an engine has a disk loading of 60-180 HP/ft² and a net efficiency within a range of about 0.57-0.75 at a takeoff flight condition, where net efficiency is defined as net thrust times flight speed divided by input power to the propulsor assembly. In certain instances, the net efficiency of the propulsor assembly is within a range of about 0.62-0.75 and the disk loading of the propulsor assembly is within a range of 60-100 HP/ft² at a takeoff flight condition. In particular examples, the net efficiency of the propulsor assembly is within a range of about 0.57-0.67 and the disk loading of the propulsor assembly is within a range of 160-180 HP/ft² at a takeoff flight condition. In particular examples, the net efficiency of the propulsor assembly is within a range of about 0.58-0.72 and the disk loading of the propulsor assembly is within a range of 100-160 HP/ft² at a takeoff flight condition. Net efficiency varies with disk loading, such that the lower limit may be assumed to vary linearly from 0.65 to 0.57 for the disk loading of 60 to 180 HP/ft² and the upper limit may be assumed to vary linearly from 0.75 to 0.67 for the disk loading 60 to 180 HP/ft². Referring to TABLE 1, below, the net efficiencies vs. disk loading are shown:

| TABLE 1 | | | | | | | |
|---|---|---|---|---|---|---|---|
| Disk Loading (HP/ft²) | 60 | 80 | 100 | 120 | 140 | 160 | 180 |
| Net Efficiency (lower limit) | 0.65 | 0.64 | 0.62 | 0.61 | 0.59 | 0.58 | 0.57 |
| Net Efficiency (upper limit) | 0.75 | 0.74 | 0.72 | 0.71 | 0.70 | 0.68 | 0.67 |

As indicated earlier, turbomachinery engines, such as the engines 100, 200, comprise many variables and factors that affect their performance and/or operation. The interplay between the various components can make it particularly difficult to develop or select one component, especially when each of the components is at a different stage of completion. For example, one or more components may be nearly complete, yet one or more other components may be in an initial or preliminary phase where only one (or a few) parameters is known. Also, each component is subject to change often more than once over the development period, which can often last for many years (e.g., 5-15 years). These complex and intricate individual and collective development processes can be cumbersome and inefficient. For at least these reasons, there is a need for devices and methods that can provide a good estimate of, not only the basic configuration or sizing needed to achieve the desired performance benefits, but also to reflect the penalties or accommodations in other areas in order to realize the desired benefits.

According to another aspect of the disclosure, the ECP can additionally provide a particularly useful indication of the efficiency and effectiveness of the engine during initial development, e.g., as a tool to accept or reject a particular configuration. Thus, the ECP can be used, for example, to guide engine development. For example, the ECP can be used to quickly and accurately determine the suitability of a particular engine without requiring individuals or teams to complete the tedious and time-consuming process of fully developing the engine. Therefore, the ECP can improve the process of developing an open rotor/unducted turbomachinery engine.

Additional examples of ECP can be found in U.S. Application No. 17/176,106, filed February 15, 2021, which is incorporated by reference.

Although depicted above as an unshrouded or open rotor engine in the examples depicted above, it should be appreciated that aspects of the disclosure provided herein may be applied to shrouded or ducted engines, partially ducted engines, aft-fan engines, or other turbomachine configurations, including those for aero-propulsion systems. Certain aspects of the disclosure may be applicable to turbofan, turboprop, or turboshaft engines.

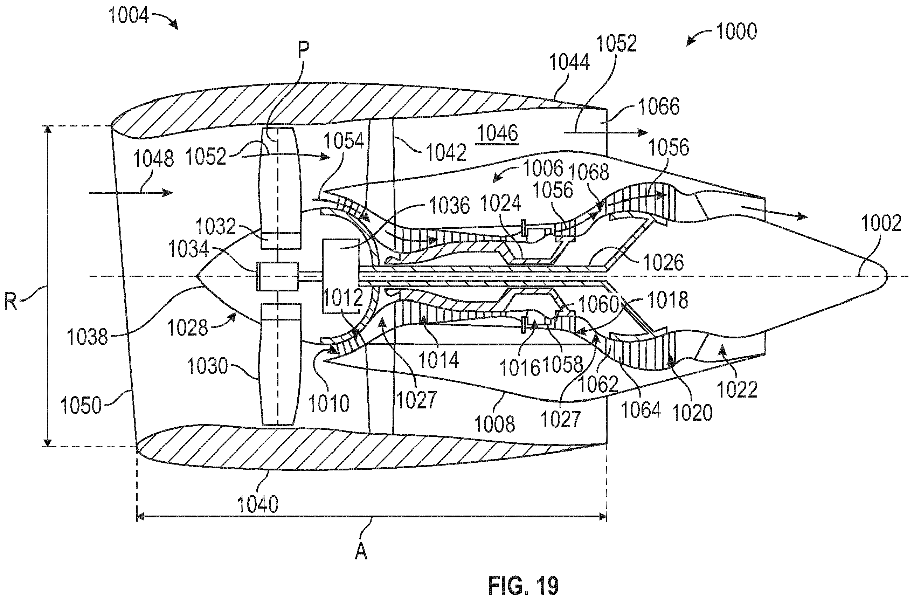

FIG. 19 is a schematic cross-sectional view of a gas turbine engine in accordance with an example of the present disclosure. More particularly, for the example of FIG. 19, the gas turbine engine is a high-bypass turbofan jet engine 1000, referred to herein as "turbofan engine 1000." As shown in FIG. 19, the turbofan engine 1000 defines an axial direction A (extending parallel to a longitudinal centerline 1002 provided for reference) and a radial direction R (extending perpendicular to the axial direction A). In general, the turbofan 1000 includes a fan section 1004 and a core engine 1006 disposed downstream from the fan section 1004. The engine 1000 also includes a gear assembly or power gear box 1036 having a plurality of gears for coupling a gas turbine shaft to a fan shaft. The position of the power gear box 1036 is not limited to that as shown in the example of turbofan 1000. For example, the position of the power gear box 1036 may vary along the axial direction A.

The exemplary core engine 1006 depicted generally includes a substantially tubular outer casing 1008 that defines an annular inlet 1010. The outer casing 1008 encases, in serial flow relationship, a compressor section including a booster or low-pressure (LP) compressor 1012 and a high-pressure (HP) compressor 1014; a combustion section 1016; a turbine section including a high-pressure (HP) turbine 1018 and a low-pressure (LP) turbine 1020; and a jet exhaust nozzle section 1022. A high-pressure (HP) shaft or spool 1024 drivingly connects the HP turbine 1018 to the HP compressor 1014. A low-pressure (LP) shaft or spool 1026 drivingly connects the LP turbine 1020 to the LP compressor 1012. Additionally, the compressor section, combustion section 1016, and turbine section together define at least in part a core air flowpath 1027 extending therethrough.

A gear assembly of the present disclosure is compatible with fixed-pitch fans, variable pitch fans, or other configurations. For the example depicted, the fan section 1004 may include a variable pitch fan 1028 having a plurality of fan blades 1030 coupled to a disk 1032 in a spaced-apart manner. As depicted, the fan blades 1030 extend outwardly from disk 1032 generally along the radial direction R. Each fan blade 1030 is rotatable relative to the disk 1032 about a pitch axis P by virtue of the fan blades 1030 being operatively coupled to a suitable actuation member 1034 configured to collectively vary the pitch of the fan blades 1030. The fan blades 1030, disk 1032, and actuation member 1034 are together rotatable about the longitudinal axis 1002 by LP shaft 1026 across a gear assembly or power gearbox 1036. A gear assembly 1036 may enable a speed change between a first shaft, e.g., LP shaft 1026, and a second shaft, e.g., LP compressor shaft and/or fan shaft. For example, in some instances, the gear assembly 1036 may be disposed in an arrangement between a first shaft and a second shaft such as to reduce an output speed from one shaft to another shaft.

More generally, the gear assembly 1036 can be placed at different locations along the axial direction A to decouple the speed of two shafts, whenever it is advantageous to do so from a component efficiency point of view, e.g., faster LP turbine and slower fan and LP compressor or faster LP turbine and LP compressor and slower fan.

The gear assembly 1036 (which can also be referred to as "a gearbox") can, in some examples, comprise a gear ratio of less than or equal to four. For example, the gearbox 1036 can comprise a gear ratio within a range of 2.0-6.0, 2.0-2.9, 3.2-4.0, 3.25-3.75, 4.0-6.0, etc. In one particular example, the gearbox 1036 can comprise a gear ratio of 3.0-3.5.

Referring still to the example of FIG. 19, the disk 1032 is covered by rotatable front nacelle 1038 aerodynamically contoured to promote airflow through the plurality of fan blades 1030. Additionally, the exemplary fan section 1004 includes an annular fan casing or outer nacelle 1040 that circumferentially surrounds the fan 1028 and/or at least a portion of the core engine 1006. The nacelle 1040 is, for the example depicted, supported relative to the core engine 1006 by a plurality of circumferentially-spaced outlet guide vanes 1042. Additionally, a downstream section 1044 of the nacelle 1040 extends over an outer portion of the core engine 1006 so as to define a bypass airflow passage 1046 therebetween.

The fans disclosed herein (e.g., the fan 1028) can comprise various materials. For example, in some instances, a fan can comprise a metal alloy. In some instances, the metal alloy can comprise aluminum, lithium, titanium, and/or other suitable metals for fan blades. In some instances, a fan can comprise composite material. In some examples, a fan can comprise a metal alloy core and a composite cover.

The fans disclosed herein (e.g., the fan 1028) can comprise various dimensions. For example, a fan can comprise a diameter (as measured at the tip of the leading edge) within a range of 72-120 inches (6-10 feet). In some instances, a fan can comprise a diameter within a range of 84-120 inches (7-10 feet) or 84-96 inches (7-8 feet).

The fans disclosed herein comprise a solidity. Solidity is based on average blade chord defined as the blade planform area (surface area on one side of a blade) divided by the blade radial span. The solidity is directly proportional to the number of blades and chord length and inversely proportional to the diameter. For purposes of this disclosure, solidity is equal to the average blade chord (C) times the number of fan blades (N) divided by the product of two (2) times pi (π) times a reference radius (R_ref), which herein is a radius equal to 0.75 times a tip radius of a rotor blade (Rt) (i.e., C × N / (2 × π × R_ref)). Using this formula, a fan can comprise a solidity between 0.5 and 1.0, or more particularly between 0.6 and 1. In other examples, a fan can comprise a solidity between 1.1 and 1.5, or 1.1-1.3 in certain examples. In still other examples, enhanced performance can be observed when the solidity is greater than or equal to 0.8 and less than or equal to 2, greater than or equal to 0.8 and less than or equal to 1.5, greater than or equal to 1 and less than or equal to 2, or greater than or equal to 1.25 and less than or equal to 1.75.

During operation of the turbofan engine 1000, a volume of air 1048 enters the turbofan 1000 through an associated inlet 1050 of the nacelle 1040 and/or fan section 1004. As the volume of air 1048 passes across the fan blades 1030, a first portion of the air 1048 as indicated by arrows 1052 is directed or routed into the bypass airflow passage 1046 and a second portion of the air 1048 as indicated by arrow 1054 is directed or routed into the LP compressor 1012. The ratio between the first portion of air 1052 and the second portion of air 1054 is commonly known as a bypass ratio. In some instances, the ducted engines disclosed herein (e.g., the engines 1000 and 1100) can comprise a bypass ratio of at least 12:1 (e.g., within a range of 12:1 to 15:1 or 12:1 to 18:1). The pressure of the second portion of air 1054 is then increased as it is routed through the high-pressure (HP) compressor 1014 and into the combustion section 1016, where it is mixed with fuel and burned to provide combustion gases 1056.

In some instances, the ducted engines disclosed 1000 can comprise an overall pressure ratio within a range of 35:1 to 60:1 or 40:1 to 50:1. As used herein the term "overall pressure ratio" is the pressure of the air measured at the exit of the high-pressure compression divided by the pressure of the air at the inlet of the low-pressure compressor.

The combustion gases 1056 are routed through the HP turbine 1018 where a portion of thermal and/or kinetic energy from the combustion gases 1056 is extracted via sequential stages of HP turbine stator vanes 1058 that are coupled to the outer casing 1008 and HP turbine rotor blades 1060 (e.g., two stages) that are coupled to the HP shaft or spool 1024, thus causing the HP shaft or spool 1024 to rotate, thereby supporting operation of the HP compressor 1014. The combustion gases 1056 are then routed through the LP turbine 1020 where a second portion of thermal and kinetic energy is extracted from the combustion gases 1056 via sequential stages of LP turbine stator vanes 1062 that are coupled to the outer casing 1008 and LP turbine rotor blades 1064 (e.g., four stages) that are coupled to the LP shaft or spool 1026, thus causing the LP shaft or spool 1026 to rotate, thereby supporting operation of the LP compressor 1012 and/or rotation of the fan 1028.

It should be noted that a high-pressure turbine (e.g., the HP turbine 1018) can, in some examples, comprise one or two rotating blade stages and that a low-pressure turbine (e.g., LP turbine 1020) can, in some instances, comprise three, four, five, six, or seven rotating blade stages.

The combustion gases 1056 are subsequently routed through the jet exhaust nozzle section 1022 of the core engine 1006 to provide propulsive thrust. Simultaneously, the pressure of the first portion of air 1052 is substantially increased as the first portion of air 1052 is routed through the bypass airflow passage 1046 before it is exhausted from a fan nozzle exhaust section 1066 of the turbofan 1000, also providing propulsive thrust. The HP turbine 1018, the LP turbine 1020, and the jet exhaust nozzle section 1022 at least partially define a hot gas path 1068 for routing the combustion gases 1056 through the core engine 1006.

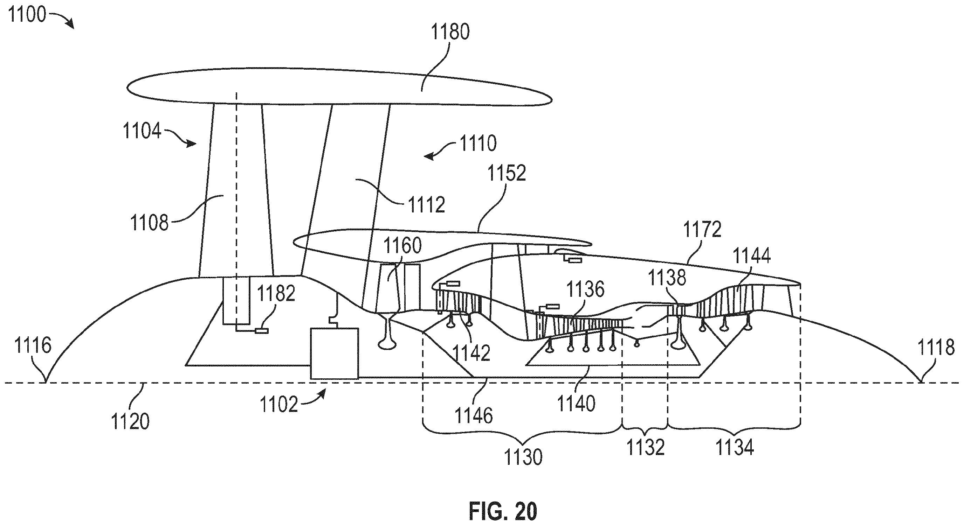

For example, FIG. 20 is a cross-sectional schematic illustration of an example of an engine 1100 that includes a gear assembly 1102 in combination with a ducted fan assembly 1104 and a core engine 1106. However, unlike the open rotor configuration of the engine 200, the fan assembly 1104 and its fan blades 1108 are contained within an annular fan case 1180 (which can also be referred to as "a nacelle") and the vane assembly 410 and the vanes 1112 extend radially between the fan cowl 1152 (and/or the engine core cowl 1172) and the inner surface of the fan case 1180. As discussed above, the gear assemblies disclosed herein can provide for increased gear ratios for a fixed gear envelope (e.g., with the same size ring gear), or alternatively, a smaller diameter ring gear may be used to achieve the same gear ratios.

The core engine 1100 comprises a compressor section 1130, a combustor section 1132, and a turbine section 1134. The compressor section 1130 can include a high-pressure compressor 1136 and a booster or a low-pressure compressor 1142. The turbine section 1134 can include a high-pressure turbine 1138 (e.g., one stage) and a low-pressure turbine 1144 (e.g., three stage). The low-pressure compressor 1142 is positioned forward of and in flow relationship with the high-pressure compressor 1136. The low-pressure compressor 1142 is rotatably coupled with the low-pressure turbine 1144 via a low-speed shaft 1146 to enable the low-pressure turbine 1144 to drive the low-pressure compressor 1142 (and a ducted fan 1160). The low-speed shaft 1146 is also operably connected to the gear assembly 1102 to provide power to the fan assembly 1104. The high-pressure compressor 1136 is rotatably coupled with the high-pressure turbine 1138 via a high-speed shaft 1140 to enable the high-pressure turbine 1138 to drive the high-pressure compressor 1136.

It should be noted that a high-pressure turbine (e.g., the high-pressure turbine 1138) can, in some examples, comprise one or two stages and that a low-pressure turbine (e.g., the low-pressure turbine 1144) can, in some instances, comprise three, four, five, or six rotating blade stages.

In some examples, the engine 1100 can comprise a pitch change mechanism 1182 coupled to the fan assembly 1104 and configured to vary the pitch of the fan blades 1108. In certain examples, the pitch change mechanism 1182 can be a linear actuated pitch change mechanism.

In some examples, the engine 1100 can comprise a variable fan nozzle. Operationally, the engine 1100 may include a control system that manages the loading of the fan, as well as potentially the exit area of the variable fan nozzle, to provide different thrust, noise, cooling capacity and other performance characteristics for various portions of the flight envelope and various operational conditions associated with aircraft operation. For example, nozzle actuation modulates the fan operating line and overall engine fan pressure ratio independent of total engine airflow.

The gear assembly 1102 (which can also be referred to as "a gearbox") can, in some examples, comprise a gear ratio of less than or equal to six or less than or equal to four. For example, the gearbox 1036 can comprise a gear ratio within a range of 2.0-6.0, 2.0-2.9, 3.2-4.0, 3.25-3.75, 4.0-6.0, etc. In one particular example, the gearbox 1036 can comprise a gear ratio of 3.0-3.5.

In some examples, an engine (e.g., the engine 100, the engine 200, the engine 100, and/or the engine 1100) can comprise a counter-rotating low-pressure turbine. For example, FIGS. 5-6 depict schematic cross-sectional illustrations of counter-rotating low-pressure turbines. In particular, FIG. 5 depicts a counter-rotating turbine 500, and FIG. 6 depicts a counter-rotating turbine 600. The counter-rotating turbines comprise inner blade stages and outer blade stages arranged in an alternating inner-outer configuration. In other words, the counter-rotating turbines do not comprise stator vanes disposed between the blade stages.

Referring to FIG.5, the counter-rotating turbine 500 comprises a plurality of inner blade stages 502 and a plurality of outer blade stages 504. More specifically, the counter-rotating turbine 500 includes three inner blades stages 502 that are coupled to and extend radially outwardly from an inner shaft 506 (which can also be referred to as "a rotor") and three outer blade stages 504 that are coupled to extend radially inwardly from an outer shaft 508 (which can also be referred to as "a drum"). In this manner, the counter-rotating turbine 500 can be considered a six stage turbine because there are six total rotating blade rows. It should be noted, however, that the counter-rotating turbine 500 would be considered to have three LPT stages, N, for purposes of determining the ECP or DECP described herein because there are three inner blade stages 502.

Referring to FIG. 6, the counter-rotating turbine 600 comprises a plurality of inner blade stages 602 and a plurality of outer blade stages 604. More specifically, the counter-rotating turbine 600 includes four inner blades stages 602 that are coupled to and extend radially outwardly from an inner shaft 606 and three outer blade stages 604 that are coupled to extend radially inwardly from an outer shaft 608. In this manner, the counter-rotating turbine 600 can be considered a seven stage turbine because there are seven total rotating blade rows. It should be noted, however, that the counter-rotating turbine 600 would be considered to have four LPT stages, N, for purposes of determining ECP or DECP described herein because there are four inner blade stages 602.

Starting from the basis of the engine correlation parameter ("ECP"), the inventor set out to determine whether the ECP (and/or its components) could be used to aid in the process of developing and/or applying to a ducted turbofan engine comprising a relatively low gear ratio (e.g., a gear ratio less than or equal to 6.0-e.g., 2.0-6.0). After numerous attempts and analyzing a multitude of engine parameters and engine configurations, the inventor discovered that the ECP, when taken together with the stage count of the high-pressure compressor, can in some cases provide an improved ducted engine configuration compared to a ducted engine configuration based only on ECP, specifically for engines comprising a gear ratio less than or equal to 6.0 (e.g., 2.0-6.0). More precisely, the inventor discovered a ducted engine correlation parameter ("DECP"), which is a relationship between the fan diameter, the gear ratio of the gearbox, the number of LPT stages, and the number of HPC stages. The inventor ultimately discovered that a good approximation for overall engine performance, efficiency, and sizing could be made based on a specific relationship among the fan diameter, the gear ratio, the number of LPT stages, and the number of HPC stages. The DECP can, in some cases, identify a more holistic ducted engine configuration, which can, for example, improve the efficiency of the ducted engine. In addition to an improved overall engine configuration, the DECP can, in some instances, be used to guide an engine development process.

The ducted engine correlation parameter (DECP) is valid only for ducted engines, and only for ducted engine where the power gearbox has a gear ratio of no more than 6.0 (e.g., 2.0-6.0). Examples of ducted engines where DECP can be applied are ducted engines 1000 and 1100. The DECP is defined as 10^{∗}D/GR/N_{LPT}/N_{HPC}, where D is the fan blade tip diameter at a leading edge of the fan blade measured in feet, GR is the gear ratio of the gearbox, N_{LPT} is the stage count of the low-pressure turbine, and N_{HPC} is the stage count of the high-pressure compressor.

DECP, which is a newly developed engine parameter can, for example, aid in the process of developing a ducted turbomachinery engine because it considers various parameters of a ducted turbofan engine and provides a good approximation of an engine's overall configuration early on in development. Values for the DECP identify key engine requirements affecting a ducted engine architecture, in a similar manner to the ECP rating does for unducted engines discussed earlier. By basing a ducted engine design on the DECP, it is more likely the one arrives at the desired improvement compared to a design based on running numerous experiments in a trial-and-error process. The DECP enables improved engine configurations for this reason, rather than relying on chance that the desired architecture is found from a design of experiments involving a large number of variables whose interrelationships are not clearly known or understood.

As noted above, turbomachinery engines, such as the turbofan engines 100, 200, 300, 400, comprise many variables and factors that affect their performance and/or operation. The interplay between the various components can make it particularly difficult to develop or select one component, especially when each of the components is at a different stage of completion. For example, one or more components may be nearly complete, yet one or more other components may be in an initial or preliminary phase where only one (or a few) parameters is known. Also, each component is subject to change often more than once over the development period, which can often last for many years (e.g., 5-15 years). These complex, intricate individual and collective development processes can be cumbersome and inefficient. For at least these reasons, the overall engine efficiency rating can provide a good estimate of, not only the basic configuration or sizing needed to achieve the desired performance benefits, but also to reflect the penalties or accommodations in other areas in order to realize the desired benefits.

According to another aspect of the disclosure, the DECP may additionally provide a particularly useful indication of the efficiency and effectiveness of the ducted engine during initial development, e.g., as a tool to accept or reject a particular ducted engine configuration. Thus, the DECP can be used, for example, in ducted turbofan engine development. For example, the DECP can be used to quickly and accurately determine parameters (e.g., the fan size, the gear ratio, the number of LPT stages, and/or the number of HPC stages) that are suitable for a particular ducted engine without requiring an individual or team to complete the tedious and time-consuming process of developing the entire engine or a component from scratch. In this manner, the overall engine efficiency rating can also improve the process of developing a ducted turbomachinery engine.

The inventor discovered that a ducted engine with a DECP within a range of 0.10-0.25 is particularly advantageous. Engines comprising a DECP within the disclosed range have been found, for example, to have reduced fuel burn by balancing component efficiencies and weight, while also meeting regulatory requirements for emissions and noise. The DECP thus provides improved turbomachinery engines and/or can help simplify one or more complexities of geared, ducted engine development.

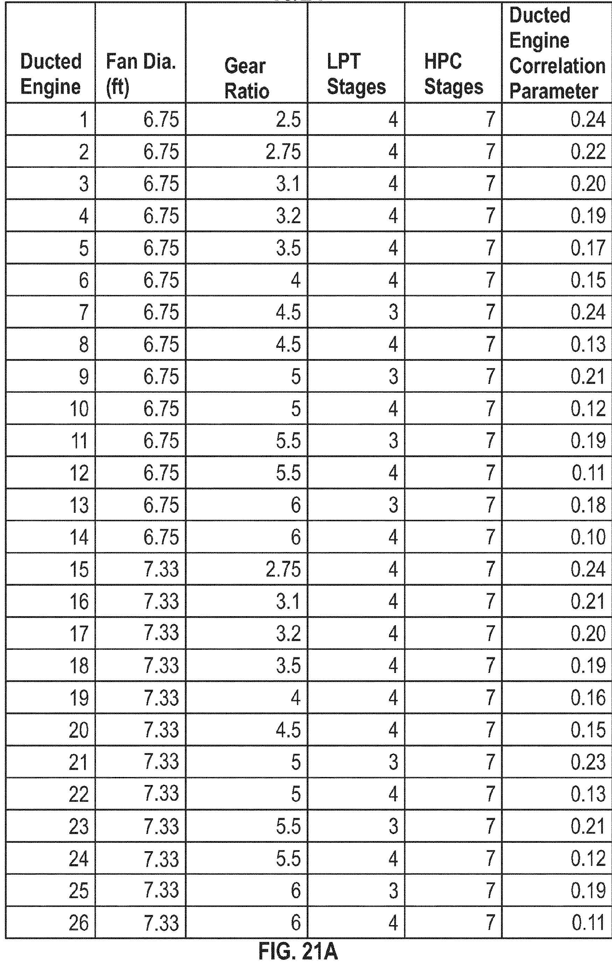

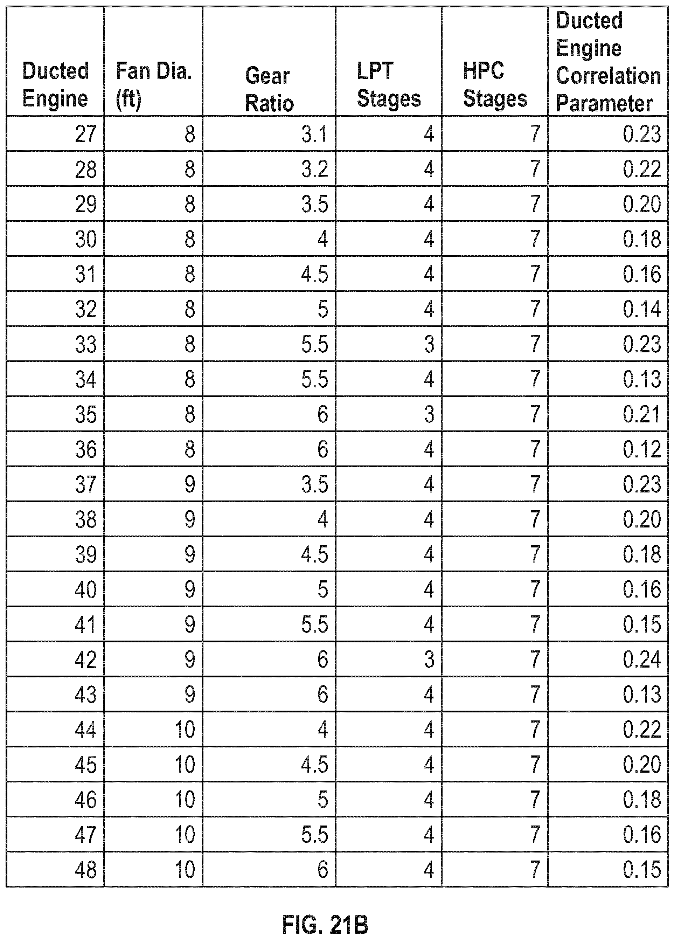

The inventor also discovered that a DECP within a range of 0.10-0.25 is particularly useful for ducted engines comprising a 3-4 stage LPT and a 7-11 stage HPC. For example, FIGS. 21A-25B depict several exemplary engines having a DECP within a range of 0.10-0.25 and a 7-11 stage HPC.

FIGS. 21A-21B depict several ducted engine configurations comprising a DECP within a range of 0.10-0.25 and a 7 stage HPC.

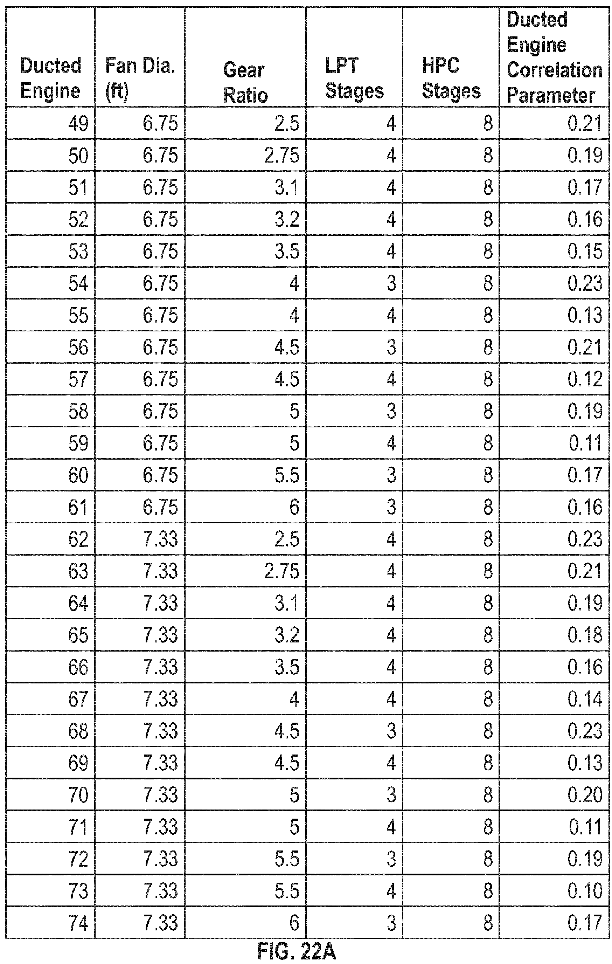

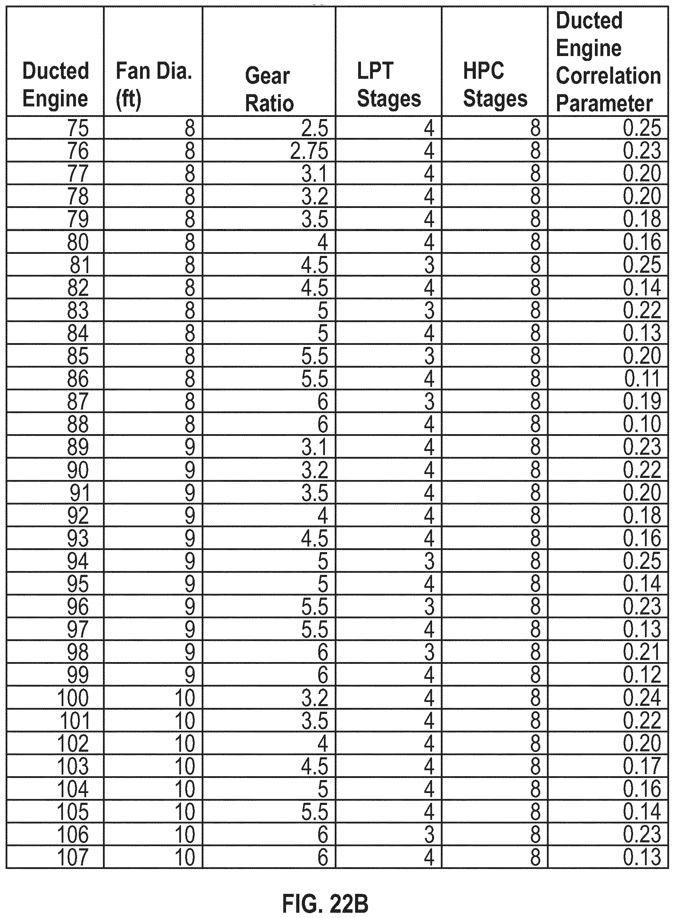

FIGS. 22A-22B depict several ducted engine configurations comprising a DECP within a range of 0.10-0.25 and an 8 stage HPC.

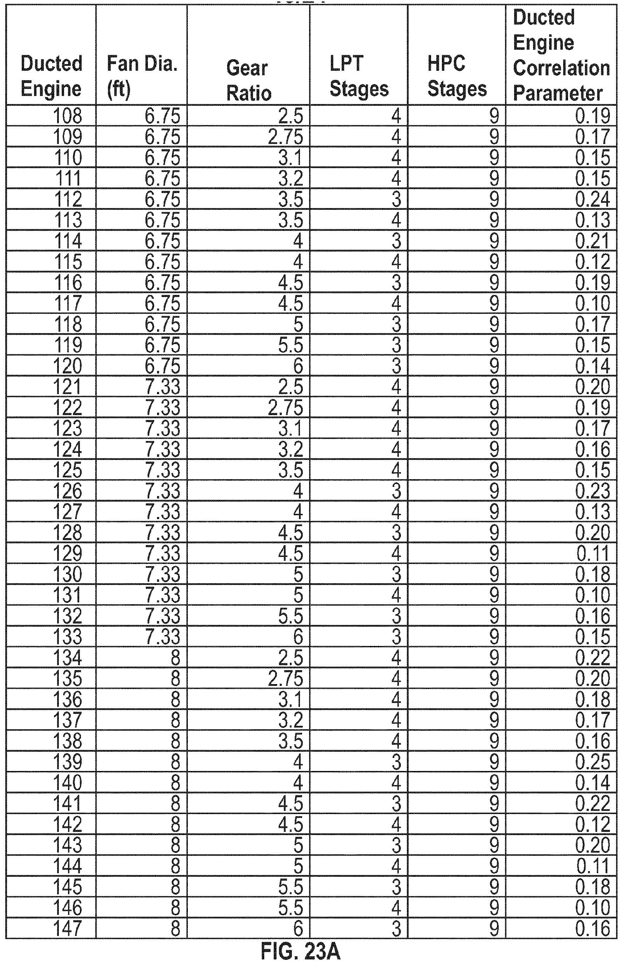

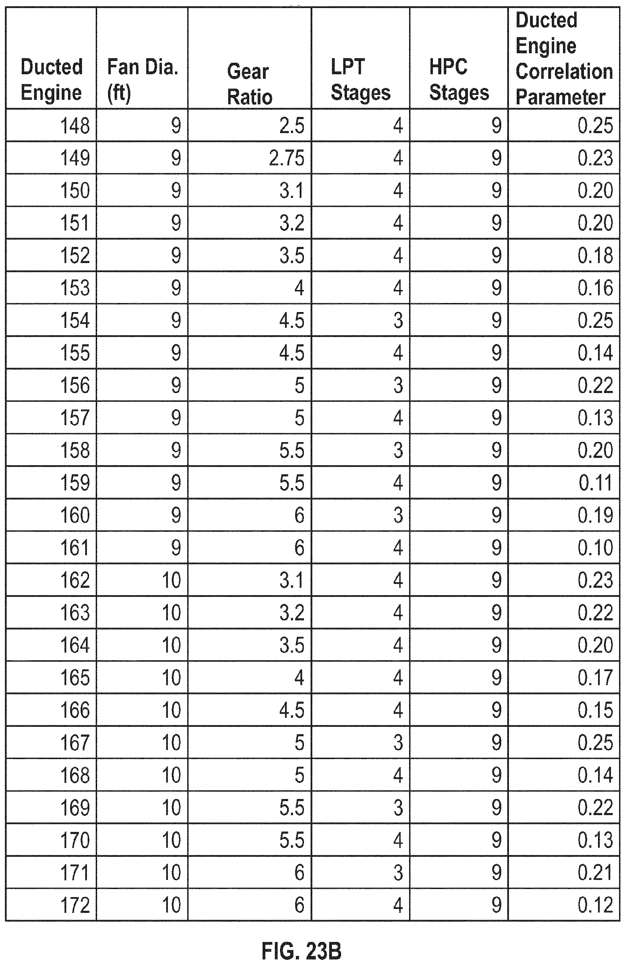

FIGS. 23A-23B depict several ducted engine configurations comprising a DECP within a range of 0.10-0.25 and a 9 stage HPC.

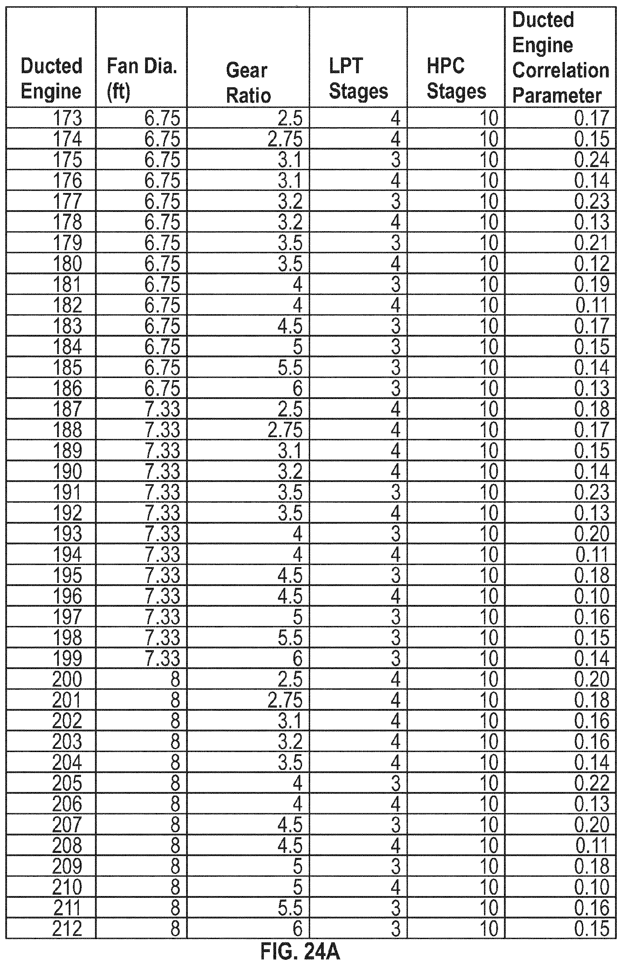

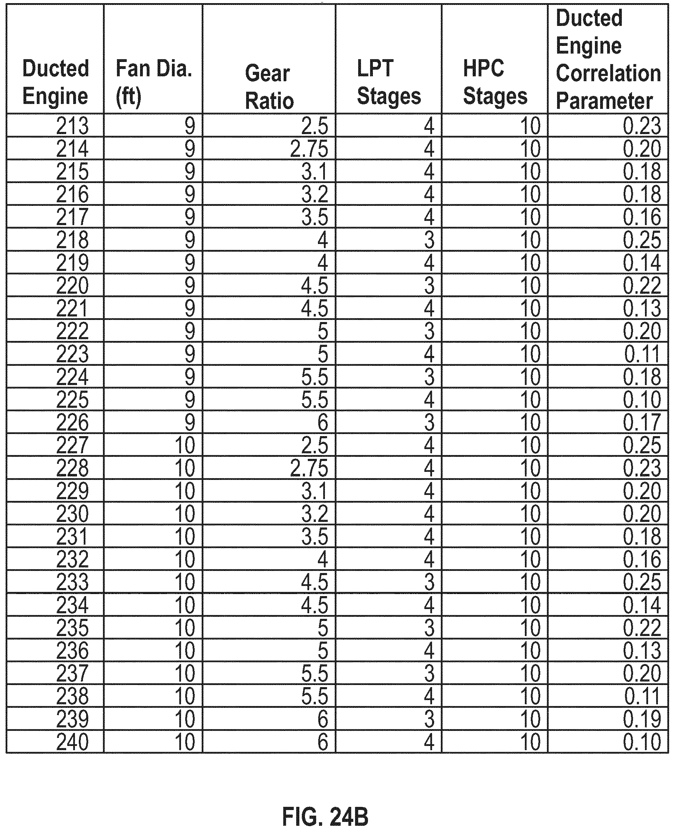

FIGS. 24A-24B depict several ducted engine configurations comprising a DECP within a range of 0.10-0.25 and a 10 stage HPC.

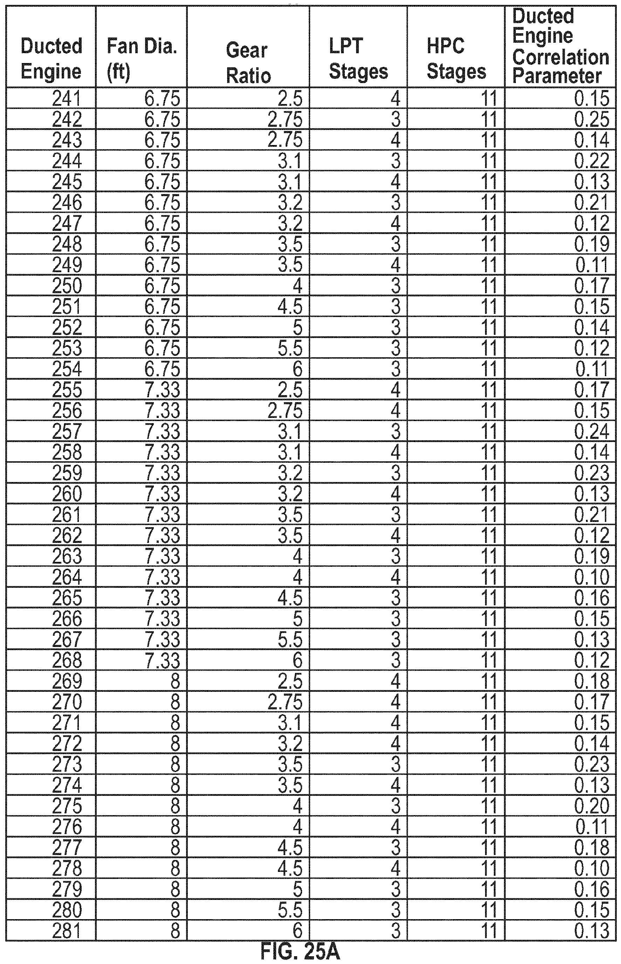

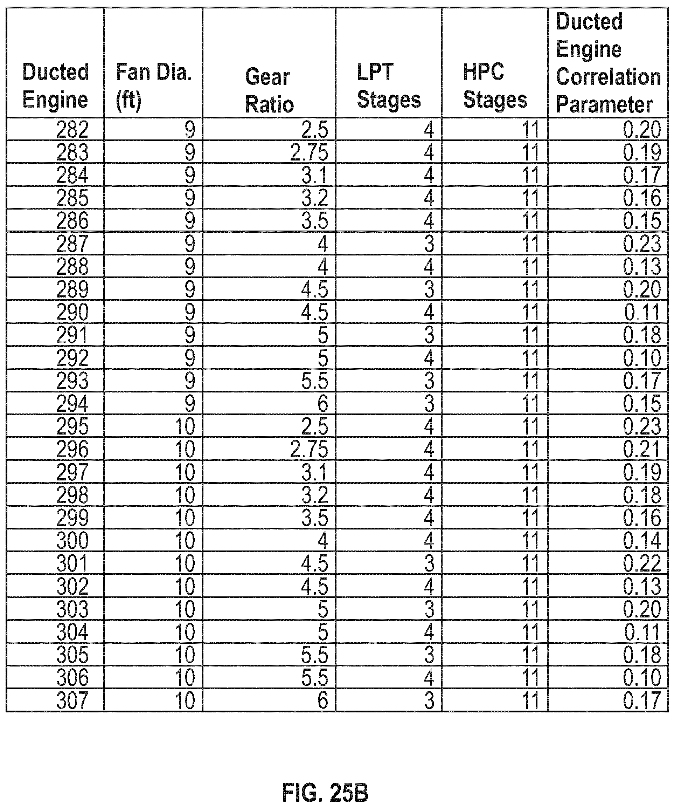

FIGS. 25A-25B depict several ducted engine configurations comprising a DECP within a range of 0.10-0.25 and an 11 stage HPC.

This written description uses examples to disclose the technology, including the best mode, and also to enable any person skilled in the art to practice the disclosed technology, including making and using any devices or systems and performing any incorporated methods. The patentable scope of the disclosed technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the disclosure are provided by the subject matter of the following examples:
Example 1. A turbomachinery engine comprises a ducted rotor assembly, a low-pressure compressor, a high-pressure compressor, a combustor, a high-pressure turbine, a low-pressure turbine, a high-pressure shaft, a low-pressure shaft, a gearbox, and a ducted engine correlation parameter. The ducted rotor assembly comprises a plurality of rotor blades arranged in a single row and defining a fan blade tip diameter. The low-pressure compressor comprises a stage count defined by a number of rows of rotating blades of the low-pressure compressor. The low-pressure compressor is aft of and in fluidic communication with the ducted rotor assembly. The high-pressure compressor comprises a stage count defined by a number of rows of rotating blades of the high-pressure compressor. The high-pressure compressor is aft of and in fluidic communication with the low-pressure compressor. The combustor is aft of and in fluidic communication with the high-pressure compressor. The high-pressure turbine comprises a stage count defined by a number of rows of rotating blades of the high-pressure turbine. The high-pressure turbine is aft of and in fluidic communication with the combustor. The low-pressure turbine comprises a stage count defined by a number of rows of rotating blades of the low-pressure turbine. The low-pressure turbine is aft of and in fluidic communication with the high-pressure turbine. The high-pressure shaft couples the high-pressure turbine to the high-pressure compressor. The low-pressure shaft couples the low-pressure turbine to the low-pressure compressor. The gearbox comprises an input, an output, and a gear ratio. The the input of the gearbox is coupled to the low-pressure shaft, and the output of the gearbox is coupled to the ducted rotor assembly. The ducted engine correlation parameter is greater than or equal to 0.10 and less than or equal to 0.25. The ducted engine correlation parameter equals 10^{∗}D/GR/N_{LPT}/N_{HPC}, where D is the fan blade tip diameter at a leading edge measured in feet, GR is the gear ratio of the gearbox, N_{LPT} is the stage count of the low-pressure turbine, and N_{HPC} is the stage count of the high-pressure compressor.
Example 1a. A turbomachinery engine comprising: a ducted rotor assembly comprising a plurality of rotor blades arranged in a single row and defining a fan blade tip diameter; a low-pressure compressor comprising a stage count defined by a number of rows of rotating blades of the low-pressure compressor, wherein the low-pressure compressor is aft of and in fluidic communication with the ducted rotor assembly; a high-pressure compressor comprising a stage count defined by a number of rows of rotating blades of the high-pressure compressor, wherein the high-pressure compressor is aft of and in fluidic communication with the low-pressure compressor; a combustor aft of and in fluidic communication with the high-pressure compressor; a high-pressure turbine comprising a stage count defined by a number of rows of rotating blades of the high-pressure turbine, wherein the high-pressure turbine is aft of and in fluidic communication with the combustor; a low-pressure turbine comprising a stage count defined by a number of rows of rotating blades of the low-pressure turbine, wherein the low-pressure turbine is aft of and in fluidic communication with the high-pressure turbine; a high-pressure shaft coupling the high-pressure turbine to the high-pressure compressor; a low-pressure shaft coupling the low-pressure turbine to the low-pressure compressor; a gearbox comprising an input, an output, and a gear ratio, wherein the input of the gearbox is coupled to the low-pressure shaft, and wherein the output of the gearbox is coupled to the ducted rotor assembly; and a ducted engine correlation parameter that is greater than or equal to 0.10 and less than or equal to 0.25, wherein the ducted engine correlation parameter equals 10^{∗}D/GR/N_{LPT}²/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.
Example 2. The turbomachinery engine of any example herein, and particularly example 1, wherein the ducted engine correlation parameter is greater than or equal to 0.10 and less than or equal to 0.20.
Example 3. The turbomachinery engine of any example herein, and particularly example 1, wherein the ducted engine correlation parameter is greater than or equal to 0.10 and less than or equal to 0.15.
Example 4. The turbomachinery engine of any example herein, and particularly example 1, wherein the ducted engine correlation parameter is greater than or equal to 0.15 and less than or equal to 0.25.
Example 5. The turbomachinery engine of any example herein, and particularly example 1, wherein the ducted engine correlation parameter is greater than or equal to 0.20 and less than or equal to 0.25.
Example 6. The turbomachinery engine of any example herein, and particularly any one of examples 1-5, wherein the ducted rotor assembly comprises 16-22 rotor blades.
Example 7. The turbomachinery engine of any example herein, and particularly any one of examples 1-5, wherein the ducted rotor assembly comprises 16-18 rotor blades.
Example 8. The turbomachinery engine of any example herein, and particularly any one of examples 1-7, wherein D is within a range of 6-10 feet.
Example 9. The turbomachinery engine of any example herein, and particularly any one of examples 1-7, wherein D is within a range of 7-8 feet.
Example 10. The turbomachinery engine of any example herein, and particularly any one of examples 1-9, wherein GR is within a range of 2-6.
Example 11. The turbomachinery engine of any example herein, and particularly any one of examples 1-9, wherein GR is within a range of 3.2-3.5.
Example 12. The turbomachinery engine of any example herein, and particularly any one of examples 1-11, wherein N_{LPT} is 3 or 4.
Example 13. The turbomachinery engine of any example herein, and particularly any one of examples 1-11, wherein N_{LPT} is 4.
Example 14. The turbomachinery engine of any example herein, and particularly any one of examples 1-13, wherein N_{HPC} is 7-11.
Example 15. The turbomachinery engine of any example herein, and particularly any one of examples 1-13, wherein N_{HPC} is 9-11.
Example 16. A turbomachinery engine comprises a fan case, a fan assembly, a booster, a compressor, a combustor, a first turbine, a second turbine, a first shaft, a second shaft, a gearbox, and a ducted engine correlation parameter. The fan assembly is disposed radially and axially within the fan case. The fan assembly comprises a plurality of rotor blades arranged in a single row and defining a fan blade tip diameter. The booster comprises a stage count defined by a number of rows of rotating blades of the first compressor, and the booster is aft of and in fluidic communication with the fan assembly. The compressor comprises a stage count defined by a number of rows of rotating blades of the compressor, and the compressor is aft of and in fluidic communication with the booster. The combustor is aft of and in fluidic communication with the compressor. The first turbine comprises a stage count defined by a number of rows of rotating blades of the first turbine, and the first turbine is aft of and in fluidic communication with the combustor. The second turbine comprises a stage count defined by a number of rows of rotating blades of the second turbine, and the second turbine is aft of and in fluidic communication with the first turbine. The first shaft couples the first turbine to the compressor. The second shaft couples the second turbine to the booster. The gearbox comprises an input, an output, and a gear ratio. The input of the gearbox is coupled to the second shaft, and the output of the gearbox is coupled to the fan assembly. The ducted engine correlation parameter is greater than or equal to 0.10 and less than or equal to 0.25. The ducted engine correlation parameter equals 10^{∗}D/GR/N_{T2}/N_{C}, where D is the fan blade tip diameter at a leading edge measured in feet, GR is the gear ratio of the gearbox, N_{T2} is the stage count of the second turbine, and Nc is the stage count of the compressor.
Example 16a. A turbomachinery engine comprises a fan case, a fan assembly, a booster, a compressor, a combustor, a first turbine, a second turbine, a first shaft, a second shaft, a gearbox, and a ducted engine correlation parameter. The fan assembly is disposed radially and axially within the fan case. The fan assembly comprises a plurality of rotor blades arranged in a single row and defining a fan blade tip diameter. The booster comprises a stage count defined by a number of rows of rotating blades of the first compressor, and the booster is aft of and in fluidic communication with the fan assembly. The compressor comprises a stage count defined by a number of rows of rotating blades of the compressor, and the compressor is aft of and in fluidic communication with the booster. The combustor is aft of and in fluidic communication with the compressor. The first turbine comprises a stage count defined by a number of rows of rotating blades of the first turbine, and the first turbine is aft of and in fluidic communication with the combustor. The second turbine comprises a stage count defined by a number of rows of rotating blades of the second turbine, and the second turbine is aft of and in fluidic communication with the first turbine. The first shaft couples the first turbine to the compressor. The second shaft couples the second turbine to the booster. The gearbox comprises an input, an output, and a gear ratio. The input of the gearbox is coupled to the second shaft, and the output of the gearbox is coupled to the fan assembly. The ducted engine correlation parameter is greater than or equal to 0.10 and less than or equal to 0.25. The ducted engine correlation parameter equals 10^{∗}D/GR/N_{T2}²/N_{C}, where D is the fan blade tip diameter at a leading edge measured in feet, GR is the gear ratio of the gearbox, N_{T2} is the stage count of the second turbine, and Nc is the stage count of the compressor.
Example 17. The turbomachinery engine of any example herein, and particularly example 16, wherein the ducted rotor assembly comprises 16-26 rotor blades.
Example 18. The turbomachinery engine of any example herein, and particularly any one of examples 16-17, wherein D is within a range of 7-8 feet.
Example 19. The turbomachinery engine of any example herein, and particularly any one of examples 16-18, wherein GR is within a range of 3.2-3.5.
Example 20. The turbomachinery engine of any example herein, and particularly any one of examples 16-19, wherein N_{T2} is 4, and wherein Nc is 9-11.
Example 21. A turbomachinery engine comprises a ducted rotor assembly, a high-pressure compressor, a low-pressure turbine, a gearbox, and a ducted engine correlation parameter. The ducted rotor assembly comprises a plurality of rotor blades arranged in a single row and defining a fan blade tip diameter. The high-pressure compressor comprises a stage count defined by a number of rows of rotating blades of the high-pressure compressor. The low-pressure turbine comprises a stage count defined by a number of rows of rotating blades of the low-pressure turbine, and the low-pressure turbine is aft of and in fluidic communication with the high-pressure compressor. The gearbox comprises an input, an output, and a gear ratio. The input of the gearbox is coupled to the low-pressure turbine, and the output of the gearbox is coupled to the ducted rotor assembly. The ducted engine correlation parameter is within a range of 0.10-0.25. The ducted engine correlation parameter equals 10^{∗}D/GR/N_{LPT}/N_{HPC}, where D is the fan blade tip diameter at a leading edge measured in feet, GR is the gear ratio of the gearbox, N_{LPT} is the stage count of the low-pressure turbine, and N_{HPC} is the stage count of the high-pressure compressor.
Example 21a. A turbomachinery engine comprises a ducted rotor assembly, a high-pressure compressor, a low-pressure turbine, a gearbox, and a ducted engine correlation parameter. The ducted rotor assembly comprises a plurality of rotor blades arranged in a single row and defining a fan blade tip diameter. The high-pressure compressor comprises a stage count defined by a number of rows of rotating blades of the high-pressure compressor. The low-pressure turbine comprises a stage count defined by a number of rows of rotating blades of the low-pressure turbine, and the low-pressure turbine is aft of and in fluidic communication with the high-pressure compressor. The gearbox comprises an input, an output, and a gear ratio. The input of the gearbox is coupled to the low-pressure turbine, and the output of the gearbox is coupled to the ducted rotor assembly. The ducted engine correlation parameter is within a range of 0.10-0.25. The ducted engine correlation parameter equals 10^{∗}D/GR/N_{LPT}²/N_{HPC}, where D is the fan blade tip diameter at a leading edge measured in feet, GR is the gear ratio of the gearbox, N_{LPT} is the stage count of the low-pressure turbine, and N_{HPC} is the stage count of the high-pressure compressor.
Example 22. The turbomachinery engine of any example herein, and particularly example 21, wherein the ducted engine correlation parameter is within a range of 0.10-0.20.
Example 23. The turbomachinery engine of any example herein, and particularly example 21, wherein the ducted engine correlation parameter is within a range of 0.10-0.15.
Example 24. The turbomachinery engine of any example herein, and particularly example 21, wherein the ducted engine correlation parameter is within a range of 0.15-0.25.
Example 25. The turbomachinery engine of any example herein, and particularly example 21, wherein the ducted engine correlation parameter is within a range of 0.20-0.25.
Example 26. The turbomachinery engine of any example herein, and particularly any one of examples 21-25, wherein the ducted rotor assembly comprises 16-22 rotor blades.
Example 27. The turbomachinery engine of any example herein, and particularly any one of examples 21-25, wherein the ducted rotor assembly comprises 16-18 rotor blades.
Example 28. The turbomachinery engine of any example herein, and particularly any one of examples 21-27, wherein D is within a range of 6-8 feet.
Example 29. The turbomachinery engine of any example herein, and particularly any one of examples 21-27, wherein D is within a range of 7-8 feet.
Example 30. The turbomachinery engine of any example herein, and particularly any one of examples 21-29, wherein GR is within a range of 2-6.
Example 31. The turbomachinery engine of any example herein, and particularly any one of examples 21-29, wherein GR is within a range of 3.0-3.5.
Example 32. The turbomachinery engine of any example herein, and particularly any one of examples 21-31, wherein N_{LPT} is 3 or 4.
Example 33. The turbomachinery engine of any example herein, and particularly any one of examples 21-31, wherein N_{LPT} is 4.
Example 34. The turbomachinery engine of any example herein, and particularly any one of examples 21-33, wherein N_{HPC} is 7-11.
Example 35. The turbomachinery engine of any example herein, and particularly any one of examples 21-33, wherein N_{HPC} is 8-11.
Example 36. The turbomachinery engine of any example herein, and particularly any one of examples 21-25, wherein N_{HPC} is 8-9.
Example 37. The turbomachinery engine of any example herein, and particularly any one of examples 21-25, wherein N_{HPC} is 9.
Example 38. The turbomachinery engine of any example herein, and particularly any one of examples 21-25 or 36-37, wherein N_{LPT} is 3-4.
Example 39. The turbomachinery engine of any example herein, and particularly any one of examples 21-25 or 36-37, wherein N_{LPT} is 4.
Example 40. The turbomachinery engine of any example herein, and particularly any one of examples 21-25 or 36-39, further comprising a bypass ratio within a range of 12-15.
Example 41. The turbomachinery engine of any example herein, and particularly any one of examples 21-25 or 36-40, further comprising an overall pressure ratio within a range of 40-50.
Example 41. The turbomachinery engine of any example herein, and particularly any one of examples 21-25 or 36-40, wherein the plurality of rotor blades comprises composite material.
Example 42. A turbomachinery engine comprising:
   a ducted rotor assembly comprising a plurality of rotor blades arranged in a single row and defining a fan blade tip diameter;
   a low-pressure compressor comprising a stage count defined by a number of rows of rotating blades of the low-pressure compressor, wherein the low-pressure compressor is aft of and in fluidic communication with the ducted rotor assembly;
   a high-pressure compressor comprising a stage count defined by a number of rows of rotating blades of the high-pressure compressor, wherein the high-pressure compressor is aft of and in fluidic communication with the low-pressure compressor;
   a combustor aft of and in fluidic communication with the high-pressure compressor;
   a high-pressure turbine comprising a stage count defined by a number of rows of rotating blades of the high-pressure turbine, wherein the high-pressure turbine is aft of and in fluidic communication with the combustor;
   a low-pressure turbine comprising a stage count defined by a number of rows of rotating blades of the low-pressure turbine, wherein the low-pressure turbine is aft of and in fluidic communication with the high-pressure turbine;
   a high-pressure shaft coupling the high-pressure turbine to the high-pressure compressor;
   a low-pressure shaft coupling the low-pressure turbine to the low-pressure compressor;
   a gearbox comprising an input, an output, and a gear ratio, wherein the input of the gearbox is coupled to the low-pressure shaft, and wherein the output of the gearbox is coupled to the ducted rotor assembly; and
   a ducted engine correlation parameter that is greater than or equal to 0.10 and less than or equal to 0.25, wherein the ducted engine correlation parameter equals 10^{∗}D/GR/N_{LPT}/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.
Example 42a. A turbomachinery engine comprising:
   a ducted rotor assembly comprising a plurality of rotor blades arranged in a single row and defining a fan blade tip diameter;
   a low-pressure compressor comprising a stage count defined by a number of rows of rotating blades of the low-pressure compressor, wherein the low-pressure compressor is aft of and in fluidic communication with the ducted rotor assembly;
   a high-pressure compressor comprising a stage count defined by a number of rows of rotating blades of the high-pressure compressor, wherein the high-pressure compressor is aft of and in fluidic communication with the low-pressure compressor;
   a combustor aft of and in fluidic communication with the high-pressure compressor;
   a high-pressure turbine comprising a stage count defined by a number of rows of rotating blades of the high-pressure turbine, wherein the high-pressure turbine is aft of and in fluidic communication with the combustor;
   a low-pressure turbine comprising a stage count defined by a number of rows of rotating blades of the low-pressure turbine, wherein the low-pressure turbine is aft of and in fluidic communication with the high-pressure turbine;
   a high-pressure shaft coupling the high-pressure turbine to the high-pressure compressor;
   a low-pressure shaft coupling the low-pressure turbine to the low-pressure compressor;
   a gearbox comprising an input, an output, and a gear ratio, wherein the input of the gearbox is coupled to the low-pressure shaft, and wherein the output of the gearbox is coupled to the ducted rotor assembly; and
   a ducted engine correlation parameter that is greater than or equal to 0.10 and less than or equal to 0.25, wherein the ducted engine correlation parameter equals 10^{∗}D/GR/N_{LPT}²/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.
Example 43. The turbomachinery engine of any preceding example, wherein the ducted engine correlation parameter is greater than or equal to 0.10 and less than or equal to 0.20.
Example 44. The turbomachinery engine of any preceding example, wherein the ducted engine correlation parameter is greater than or equal to 0.10 and less than or equal to 0.15.
Example 45. The turbomachinery engine of any preceding example, wherein the ducted rotor assembly comprises 16-22 rotor blades.
Example 46. The turbomachinery engine of any preceding example, wherein D is within a range of 6-10 feet.
Example 47. The turbomachinery engine of any preceding example, wherein GR is within a range of 2-6.
Example 48. The turbomachinery engine of any preceding example, wherein N_{LPT} is 3 or 4.
Example 49. The turbomachinery engine of any preceding example, wherein N_{HPC} is 8-11.
Example 50. A turbomachinery engine comprising:
   a fan case;
   a fan assembly disposed radially and axially within the fan case, wherein the fan assembly comprises a plurality of rotor blades arranged in a single row and defining a fan blade tip diameter;
   a booster comprising a stage count defined by a number of rows of rotating blades of the first compressor, wherein the booster is aft of and in fluidic communication with the fan assembly;
   a compressor comprising a stage count defined by a number of rows of rotating blades of the compressor, wherein the compressor is aft of and in fluidic communication with the booster;
   a combustor aft of and in fluidic communication with the compressor;
   a first turbine comprising a stage count defined by a number of rows of rotating blades of the first turbine, wherein the first turbine is aft of and in fluidic communication with the combustor;
   a second turbine comprising a stage count defined by a number of rows of rotating blades of the second turbine, wherein the second turbine is aft of and in fluidic communication with the first turbine;
   a first shaft coupling the first turbine to the compressor;
   a second shaft coupling the second turbine to the booster;
   a gearbox comprising an input, an output, and a gear ratio, wherein the input of the gearbox is coupled to the second shaft, and wherein the output of the gearbox is coupled to the fan assembly; and
   a ducted engine correlation parameter that is greater than or equal to 0.10 and less than or equal to 0.25, wherein the ducted engine correlation parameter equals 10^{∗}D/GR/N_{T2}/N_{C}, wherein D is the fan blade tip diameter at a leading edge measured in feet, wherein GR is the gear ratio of the gearbox, wherein N_{T2} is the stage count of the second turbine, and wherein Nc is the stage count of the compressor.
Example 50a. A turbomachinery engine comprising:
   a fan case;
   a fan assembly disposed radially and axially within the fan case, wherein the fan assembly comprises a plurality of rotor blades arranged in a single row and defining a fan blade tip diameter;
   a booster comprising a stage count defined by a number of rows of rotating blades of the first compressor, wherein the booster is aft of and in fluidic communication with the fan assembly;
   a compressor comprising a stage count defined by a number of rows of rotating blades of the compressor, wherein the compressor is aft of and in fluidic communication with the booster;
   a combustor aft of and in fluidic communication with the compressor;
   a first turbine comprising a stage count defined by a number of rows of rotating blades of the first turbine, wherein the first turbine is aft of and in fluidic communication with the combustor;
   a second turbine comprising a stage count defined by a number of rows of rotating blades of the second turbine, wherein the second turbine is aft of and in fluidic communication with the first turbine;
   a first shaft coupling the first turbine to the compressor;
   a second shaft coupling the second turbine to the booster;
   a gearbox comprising an input, an output, and a gear ratio, wherein the input of the gearbox is coupled to the second shaft, and wherein the output of the gearbox is coupled to the fan assembly; and
   a ducted engine correlation parameter that is greater than or equal to 0.10 and less than or equal to 0.25, wherein the ducted engine correlation parameter equals 10^{∗}D/GR/N_{T2}²/N_{C}, wherein D is the fan blade tip diameter at a leading edge measured in feet, wherein GR is the gear ratio of the gearbox, wherein N_{T2} is the stage count of the second turbine, and wherein Nc is the stage count of the compressor.
Example 51. The turbomachinery engine of any preceding example, wherein the ducted rotor assembly comprises 16-26 rotor blades.
Example 52. The turbomachinery engine of any preceding example, wherein D is within a range of 7-8 feet.
Example 53. The turbomachinery engine of any preceding example, wherein GR is within a range of 3.2-3.5.
Example 54. The turbomachinery engine of any preceding example, wherein N_{T2} is 4, and wherein Nc is 9-11.
Example 55. A turbomachinery engine comprising:
   a ducted rotor assembly comprising a plurality of rotor blades arranged in a single row and defining a fan blade tip diameter;
   a high-pressure compressor comprising a stage count defined by a number of rows of rotating blades of the high-pressure compressor;
   a low-pressure turbine comprising a stage count defined by a number of rows of rotating blades of the low-pressure turbine, wherein the low-pressure turbine is aft of and in fluidic communication with the high-pressure compressor;
   a gearbox comprising an input, an output, and a gear ratio, wherein the input of the gearbox is coupled to the low-pressure turbine, and wherein the output of the gearbox is coupled to the ducted rotor assembly; and
   a ducted engine correlation parameter that is within a range of 0.10-0.25, wherein the ducted engine correlation parameter equals 10^{∗}D/GR/N_{LPT}/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.
Example 55a. A turbomachinery engine comprising:
   a ducted rotor assembly comprising a plurality of rotor blades arranged in a single row and defining a fan blade tip diameter;
   a high-pressure compressor comprising a stage count defined by a number of rows of rotating blades of the high-pressure compressor;
   a low-pressure turbine comprising a stage count defined by a number of rows of rotating blades of the low-pressure turbine, wherein the low-pressure turbine is aft of and in fluidic communication with the high-pressure compressor;
   a gearbox comprising an input, an output, and a gear ratio, wherein the input of the gearbox is coupled to the low-pressure turbine, and wherein the output of the gearbox is coupled to the ducted rotor assembly; and
   a ducted engine correlation parameter that is within a range of 0.10-0.25, wherein the ducted engine correlation parameter equals 10^{∗}D/GR/N_{LPT}²/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.
Example 56. The turbomachinery engine of any preceding example, wherein the ducted engine correlation parameter is within a range of 0.15-0.25.
Example 57. The turbomachinery engine of any preceding example, wherein the ducted engine correlation parameter is within a range of 0.20-0.25.
Example 58. The turbomachinery engine of any preceding example, wherein the ducted rotor assembly comprises 16-22 rotor blades.
Example 59. The turbomachinery engine of any preceding example, wherein D is within a range of 6-8 feet.
Example 60. The turbomachinery engine of any preceding example, wherein GR is within a range of 3-3.5.
Example 61. The turbomachinery engine of any preceding example, wherein NLPT is 3 or 4, and wherein NHPC is 8-9.

## Claims

1. A turbomachinery engine comprising:
a ducted rotor assembly comprising a plurality of rotor blades arranged in a single row and defining a fan blade tip diameter;
a low-pressure compressor comprising a stage count defined by a number of rows of rotating blades of the low-pressure compressor, wherein the low-pressure compressor is aft of and in fluidic communication with the ducted rotor assembly;
a high-pressure compressor comprising a stage count defined by a number of rows of rotating blades of the high-pressure compressor, wherein the high-pressure compressor is aft of and in fluidic communication with the low-pressure compressor;
a combustor aft of and in fluidic communication with the high-pressure compressor;
a high-pressure turbine comprising a stage count defined by a number of rows of rotating blades of the high-pressure turbine, wherein the high-pressure turbine is aft of and in fluidic communication with the combustor;
a low-pressure turbine comprising a stage count defined by a number of rows of rotating blades of the low-pressure turbine, wherein the low-pressure turbine is aft of and in fluidic communication with the high-pressure turbine;
a high-pressure shaft coupling the high-pressure turbine to the high-pressure compressor;
a low-pressure shaft coupling the low-pressure turbine to the low-pressure compressor;
a gearbox comprising an input, an output, and a gear ratio, wherein the input of the gearbox is coupled to the low-pressure shaft, and wherein the output of the gearbox is coupled to the ducted rotor assembly; and
a ducted engine correlation parameter that is greater than or equal to 0.10 and less than or equal to 0.25, wherein the ducted engine correlation parameter equals 10^{∗}D/GR/N_{LPT}²/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.

2. The turbomachinery engine of claim 1, wherein the ducted engine correlation parameter is greater than or equal to 0.10 and less than or equal to 0.20.

3. The turbomachinery engine of any preceding claim, wherein the ducted engine correlation parameter is greater than or equal to 0.10 and less than or equal to 0.15.

4. The turbomachinery engine of any preceding claim, wherein the ducted rotor assembly comprises 16-22 rotor blades.

5. The turbomachinery engine of any preceding claim, wherein D is within a range of 6-10 feet.

6. The turbomachinery engine of any preceding claim, wherein GR is within a range of 2-6.

7. The turbomachinery engine of any preceding claim, wherein N_{LPT} is 3 or 4.

8. The turbomachinery engine of any preceding claim, wherein N_{HPC} is 8-11.

9. A turbomachinery engine comprising:
a fan case;
a fan assembly disposed radially and axially within the fan case, wherein the fan assembly comprises a plurality of rotor blades arranged in a single row and defining a fan blade tip diameter;
a booster comprising a stage count defined by a number of rows of rotating blades of the first compressor, wherein the booster is aft of and in fluidic communication with the fan assembly;
a compressor comprising a stage count defined by a number of rows of rotating blades of the compressor, wherein the compressor is aft of and in fluidic communication with the booster;
a combustor aft of and in fluidic communication with the compressor;
a first turbine comprising a stage count defined by a number of rows of rotating blades of the first turbine, wherein the first turbine is aft of and in fluidic communication with the combustor;
a second turbine comprising a stage count defined by a number of rows of rotating blades of the second turbine, wherein the second turbine is aft of and in fluidic communication with the first turbine;
a first shaft coupling the first turbine to the compressor;
a second shaft coupling the second turbine to the booster;
a gearbox comprising an input, an output, and a gear ratio, wherein the input of the gearbox is coupled to the second shaft, and wherein the output of the gearbox is coupled to the fan assembly; and
a ducted engine correlation parameter that is greater than or equal to 0.10 and less than or equal to 0.25, wherein the ducted engine correlation parameter equals 10^{∗}D/GR/N_{T2}²/N_{C}, wherein D is the fan blade tip diameter at a leading edge measured in feet, wherein GR is the gear ratio of the gearbox, wherein N_{T2} is the stage count of the second turbine, and wherein Nc is the stage count of the compressor.

10. The turbomachinery engine of claim 9, wherein the ducted rotor assembly comprises 16-26 rotor blades.

11. The turbomachinery engine of claim 9 or 10, wherein D is within a range of 7-8 feet.

12. The turbomachinery engine of any of claims 9 to 11, wherein GR is within a range of 3.2-3.5.

13. The turbomachinery engine of any of claims 9 to 12, wherein N_{T2} is 4, and wherein Nc is 9-11.

14. A turbomachinery engine comprising:
a ducted rotor assembly comprising a plurality of rotor blades arranged in a single row and defining a fan blade tip diameter;
a high-pressure compressor comprising a stage count defined by a number of rows of rotating blades of the high-pressure compressor;
a low-pressure turbine comprising a stage count defined by a number of rows of rotating blades of the low-pressure turbine, wherein the low-pressure turbine is aft of and in fluidic communication with the high-pressure compressor;
a gearbox comprising an input, an output, and a gear ratio, wherein the input of the gearbox is coupled to the low-pressure turbine, and wherein the output of the gearbox is coupled to the ducted rotor assembly; and
a ducted engine correlation parameter that is within a range of 0.10-0.25, wherein the ducted engine correlation parameter equals 10^{∗}D/GR/N_{LPT}²/N_{HPC}, wherein D is the fan blade tip diameter at a leading edge measured in feet, wherein GR is the gear ratio of the gearbox, wherein N_{LPT} is the stage count of the low-pressure turbine, and wherein N_{HPC} is the stage count of the high-pressure compressor.

15. The turbomachinery engine of claim 14, wherein:
the ducted engine correlation parameter is within a range of 0.15-0.25; and/or
the ducted rotor assembly comprises 16-22 rotor blades; and/or
D is within a range of 6-8 feet; and/or
GR is within a range of 3-3.5; and/or
N_{LPT} is 3 or 4; and/or
N_{HPC} is 8-9.
